# EUROPEAN PATENT APPLICATION

(11) **EP 1 717 689 A1**
(43) Date of publication of application: **02.11.2006**
(21) Application number: 06250860.1
(22) Date of filing: 17.02.2006
(51) Int. Cl.: G06F 3/06, G06F 11/34

(54) **Storage system and storage data migration method**

(30) Priority: 19.04.2005 JP 2005120431
(71) Applicant: HITACHI, LTD., Chiyoda-ku Tokyo 100-8280 (JP)
(72) Inventor: Nagata, Koji c/o Hitachi, Ltd, 12F, 6-1 Marunouchi 1-chome Tokyo 100-82 (JP)
(74) Representative: Hodsdon, Stephen James

(57) **Abstract**

The present invention suitably monitors the performance of a migration destination volume and conducts data migration all over again over a short time.

When conducting data migration, all data is copied from the migration source volume (1) to the migration destination volume (2), and when the full copy is completed, the host access path is switched to the migration destination volume (2). The copy-pair between the volumes is maintained following completion of the full copy, and difference data (5) created in the migration destination volume (2) is managed. A performance monitoring unit (6) monitors performance of the migration destination volume (2) based on indices according to migration source volume type. When, as a result of monitoring, restoration to the status prior to data migration is decided, difference data is copied from the migration destination volume (2) to the migration source volume (1), and the host access path of the host (4) is switched to the migration source volume (1).

## Description

This application relates to and claims priority from Japanese Patent Application No. 2005-120431 filed on April 19, 2005, the entire disclosure of which is incorporated herein by reference.

The present invention relates to a storage system having a plurality of differing types of volumes, and a method of migrating storage system data.

The storage system provides a storage area based on a RAID (Redundant Array of Independent Disks) disposed and configured, for example, as an array of a large number of disk drives. Logical volumes being logical storage areas are formed in the physical storage area of each disk drive. By issuing write and read commands to the storage system, the host computer can read and write data between desired volumes.

The storage system can provide, for example, volumes of differing RAID configurations to the host computer. Users such as the system manager and maintenance personnel and the like can transfer the stored content of a certain volume to another volume in accordance with frequency of use of the volume. Such movement of volumes is known as data migration (see Japanese Patent Application Laid-open No. H9-274544). In the conventional technology disclosed in this patent document, for example, a frequently used volume is assigned to a disk drive operated with RAID1, and a rarely used volume is assigned to a disk drive operated with RAID5.

With the conventional technology disclosed in the afore-mentioned patent document, the RAID configuration can be changed dynamically in volume units, however, even if the volume configuration is changed, the predicted performance may not be obtained in some cases. Thus, following data migration, it is necessary for the user to monitor the performance of the reassigned volume to verify whether the predicted performance is obtained, and whether or not this performance has settled within the assumed range of performance deterioration, and the like.

Incidentally, the mixing of a plurality of differing types of disk drives of differing performance within the same storage system has been considered in recent years. Data migration between two volumes mutually differing at the physical device level has therefore also been considered.

In this case, therefore, it is also necessary to consider the type of disk drive, and to verify volume performance following data migration. However, since differences between mutually differing types of disk drives has not conventionally been considered when verifying volume performance, data migration between volumes on differing types of disk drives cannot be accommodated.

Furthermore, following data migration, depending upon the reason for, for example, not obtaining the scheduled volume performance, all stored content of the migration destination must be copied to the migration source when reassigning the volume from the migration destination to the migration source. Thus, when attempting to return to the condition prior to data migration in order to conduct data migration again, all data must be copied, requiring considerable time and effort, and hindering ease of use.

An object of the present invention is to provide a storage system and a method of migrating storage system data which can verify performance following data migration based on indices according to volume type. A further object of the present invention is to provide a storage system and a method of migrating storage system data which can rapidly switch from the migration destination to the migration source. Further objects of the present invention will be apparent from the following disclosure of the embodiments.

A storage system according to one aspect of the present invention to preferably solve the afore-mentioned problems has a plurality of types of volumes which can be used by the host device, a control unit inducing migration of data between a migration source volume and the migration destination volume each selected from a plurality of types of volumes, and a monitoring unit monitoring the operation status of the migration destination volume when data is migrated from the migration source volume to the migration destination volume by the control unit, in which the monitoring unit monitors the operation status of the migration destination volume with prescribed indices in accordance with the type of migration destination volume.

The plurality of types of volumes may be classified by, for example, at least one attribute of the storage device type set for each volume, the data I/O speed of the storage device set for each volume, and the RAID configuration type of each volume. In other words, for example, as with FC (Fiber Channel) disks and SATA (Serial AT Attachment) disks and the like, a plurality of types of volumes can be created from differing types of disk drives. Furthermore, for example, as with drives rotating at 10,000rpm and drives rotating at 15,000rpm, a plurality of types of volumes can be created from drives having differing speeds of rotation (disk I/O speed). Furthermore, as with the RAID1 storage area and the RAID5 storage area, a plurality of types of volumes of differing RAID configuration can also be created. Furthermore, by changing the combination of these various attributes (disk drive type, data I/O speed, RAID configuration), a greater number of types of volumes can also be created.

The control unit may select the migration source volume and the migration destination volume from the plurality of types of volumes. The control unit can select the migration source volume and the migration destination volume so that at least part of the attributes of both volumes differ. For example, the control unit may select a volume on a storage disk of comparatively high reliability (FC disk) as the migration source volume, and select a volume on a storage disk of comparatively low reliability (SATA disk) as the migration destination volume.

When data migration from the migration source volume to the migration destination volume is conducted by the control unit, the monitoring unit monitors the operation status of the migration destination volume with prescribed indices in accordance with the type of migration destination volume.

The control unit can continue to maintain the correspondence relationship between the migration source volume and the migration destination volume while the operation status of the migration destination volume is monitored by the monitoring unit. The correspondence relationship between the migration source volume and the migration destination volume can be, for example, a relationship in which either volume can be a copy source volume, and either volume can be a copy destination volume, and the like. The control unit can be set to ensure that data migration from the migration source volume to the migration destination volume is not confirmed while the migration destination volume is monitored by the monitoring unit. While confirmation is postponed, the control unit can maintain the correspondence relationship between the migration source volume and the migration destination volume, and prepare for conducting data migration again.

The prescribed indices are preferably preset based on the type of migration destination volume (type of disk drive, disk I/O speed, and RAID configuration and the like). The indices can be, for example, the total number of accesses per unit time, the total number of write accesses per unit time, the total number of read accesses per unit time, the write access cache hit rate, the read access cache hit rate, the data transfer size per unit time, the write data transfer size per unit time, or the read data transfer size per unit time. One or more of these indices can be selected in accordance with the type of migration destination volume, and the operation status of the migration destination volume monitored based on the selected indices.

The migration destination volume can be created based on a storage device of comparatively low random access performance in comparison with the migration source volume. In this case, the monitoring unit can monitor the random access status of at least the migration destination volume.

For example, a SATA disk can be used as a storage device of comparatively low random access performance. Conversely, for example, an FC disk can be used as a storage device of comparatively high random access performance.

In embodiments of the present invention, a management computer connected to the control unit, and having a user interface which can display monitoring results from the monitoring unit, and issue instructions to the control unit, is further provided. Based on instructions from the management computer, the control unit controls data migration between the migration source volume and the migration destination volume.

In embodiments of the present invention, the control unit (1) conducts data migration from the migration source volume to the migration destination volume in accordance with preset migration conditions, and (2) determines whether or not to continue using the migration destination volume based on monitoring results related to the operation status of the migration destination volume from the monitoring unit, and preset restore conditions.

For example, when the frequency of use of a certain volume increases to equal to or greater than a prescribed value, the control unit uses that volume as the migration source volume and starts data migration to a migration destination volume which can support more rapid access. The monitoring unit monitors the operation status of the migration destination volume. Based on these monitoring results and the restore conditions, the control unit can determine whether or not to continue using the migration destination volume. For example, when the scheduled performance is not obtained, and when deterioration in performance exceeding the scheduled deterioration in performance is detected, the control unit can halt use of the migration destination volume, and switch to the migration source volume.

In embodiments of the present invention, when the control unit halts use of the migration destination volume based on monitoring results from the monitoring unit, the control unit induces synchronization of the stored content of the migration destination volume and the stored content of the migration source volume. For example, by inducing copying of difference data for the stored content of the migration destination volume and the stored content of the migration source volume from the migration destination volume to the migration source volume, the control unit can synchronize the migration destination volume and the migration destination volume.

In embodiments of the present invention, the control unit (1) manages difference data for the volumes while maintaining the correspondence relationship between the migration source volume and the migration destination volume when data migration from the migration source volume to the migration destination volume is completed, and (2) induces synchronization of the migration destination volume and the migration source volume by inducing copying of difference data to the migration source volume.

The control unit may also accept access requests from the host device when inducing migration of data between the migration source volume and the migration destination volume. In other words, the control unit can induce migration of data between a plurality of volumes while providing a volume to the host device, without halting the access request from the host device.

For example, when inducing migration of data between the migration source volume and the migration destination volume, by writing write data to both the migration source volume and the migration destination volume when write data is received from the host device, the control unit can conduct data migration while receiving an access request from the host device.

When the preset prescribed time has elapsed following completion of migration of data from the migration source volume to the migration destination volume, the monitoring unit can complete monitoring related to the operation status of the migration destination volume, and when monitoring by the monitoring unit is completed, the control unit can also induce confirmation of data migration from the migration source volume to the migration destination volume. In other words, when the time elapsed following completion of data migration from the migration source volume to the migration destination volume reaches the preset prescribed time, the monitoring unit induces completion of monitoring in relation to the migration destination volume. When monitoring by the monitoring unit is complete, the control unit can induce confirmation of data migration from the migration source volume to the migration destination volume.

When there is an explicit completion instruction, the monitoring unit preferably completes monitoring in relation to the operation status of the migration destination volume, and when the monitoring by the monitoring unit is complete, the control unit can also induce confirmation of data migration from the migration source volume to the migration destination volume.

The features of one or more of the above listed embodiments may be combined.

A storage system data migration method according to another aspect of the present invention is a method for controlling data migration between volumes in a storage system having a plurality of types of volumes. This method comprises a selection step in which a migration source volume and a migration destination volume are selected from a plurality of types of volumes, a first copying step in which the migration source volume and the migration destination volume are mutually assigned to create a copy-pair, and the entire stored content of the migration source volume is copied first to the migration destination volume, a first writing step in which write access is received from the host device during operation of the first copy, and write data received from the host device is written to the migration source volume and the migration destination volume, a first switching step in which access from the host device is switched to the migration destination volume following completion of the first copy, a difference data management step in which difference data created between the migration destination volume and the migration source volume is managed, and a monitoring step in which the operation status of the migration destination volume is monitored with prescribed indices in accordance with the type of migration destination volume following completion of the first copy.

Furthermore, following the monitoring step, an determination step for determining whether or not to halt use of the migration destination volume based on monitoring results from the monitoring step, a second copying step in which difference data managed with the difference data management step is copied a second time to the migration source volume when a decision is made with the determination step to halt use of the migration destination volume, a second writing step in which write data received from the host device is written to both the migration destination volume and the migration source volume during execution of the first copy, a copy-pair termination step in which the copy-pair created with the first copying step is terminated following completion of the second copy, and a second switching step in which access from the host device is switched to the migration source volume following termination of the copy-pair, can also be included.

Furthermore, following the determination step, a migration confirmation step terminating the copy-pair and completing management of difference data with the difference data management step when a decision is made with the determination step to continue use of the migration destination volume, can also be included.

All or part of the functions, methods, and steps of the present invention can be configured as a computer program in some cases. This computer program can be fixed on a recording medium and transferred and the like, and can also be transmitted via communications networks such as the Internet and the like.

### BRIEF DESCRIPTION OF THE DRAWINGS

FIG. 1 is a diagram showing the concept of the embodiments of the present invention;
FIG. 2 is a block diagram showing the overall configuration of the storage system;
FIG. 3 is a diagram showing the storage structure of the storage system;
FIG. 4 is a diagram showing the configuration of the mapping table and the freespace management table;
FIG. 5 is a diagram showing the configuration of the difference management table, the copy-pair management table, and the copy pointer management table;
FIG. 6 is a diagram showing the configuration of the data migration conditions management table and the restore conditions management table;
FIG. 7 is a diagram showing the configuration of the performance monitoring table;
FIG. 8 is a schematic block diagram focusing on the functions of the storage system;
FIG. 9 is a diagram showing the disk drive ranking and tables ranking write access time and read access time;
FIG. 10 is a flowchart showing write processing for a volume based on an FC disk;
FIG. 11 is a flowchart showing write processing for a volume based on a SATA disk;
FIG. 12 is a flowchart showing data migration processing;
FIG. 13 is a flowchart showing difference management processing;
FIG. 14 is a flowchart showing performance monitoring processing;
FIG. 15 is a flowchart showing random write rate display processing;
FIG. 16 is a diagram showing a configuration example of a performance monitoring screen;
FIG. 17 is a flowchart showing restore processing;
FIG. 18 is a flowchart showing processing inducing confirmation of data migration; and
FIG. 19 is a diagram showing the state of change in status of the migration source volume and the migration destination volume in schematic format.

The embodiments of the present invention are described below in reference to the figures. In the present embodiment, by monitoring the performance of the migration destination volume based on indices in accordance with the type of volume configuration, whether or not the selection of the migration destination volume is suitable for the data migration can be determined.

If the migration destination volume is unsuitable for the data migration, only difference data created between the migration source volume and the migration destination volume is copied from the migration destination volume to the migration source volume following data migration. Thus, the stored content of the migration source volume can be updated to the latest stored content. A migration destination volume considered to be more suitable can then be selected and data migration executed again.

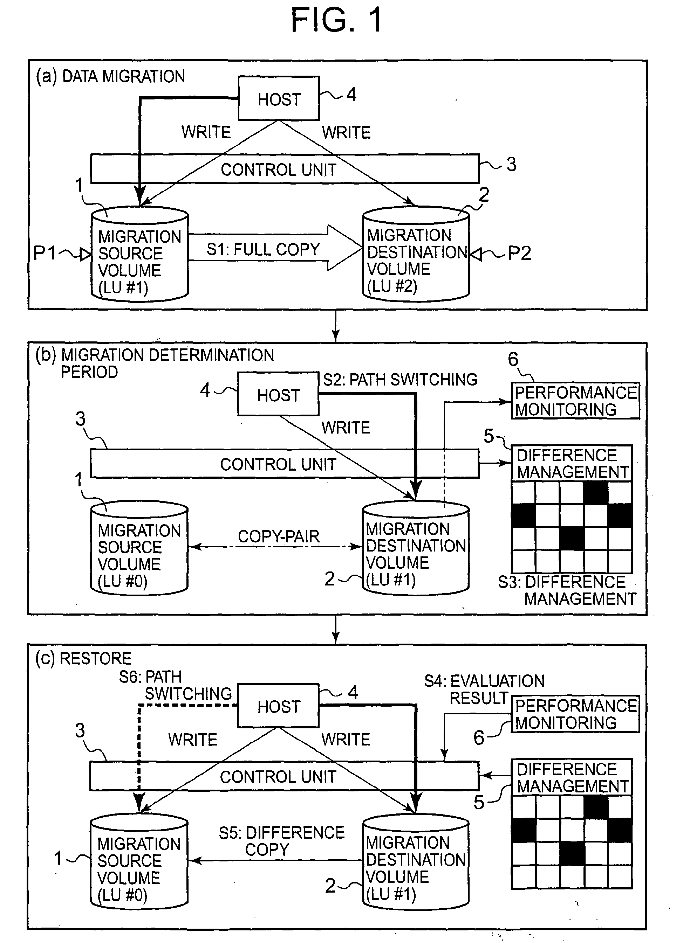

FIG. 1 is a diagram showing the overall concept of the embodiments of the present invention. This storage system has a migration source volume 1 and a migration destination volume 2 of differing types, and data migration between these volumes 1 and 2 is controlled by the control unit 3.

The data group used by the host 4 is stored in the migration source volume 1. By accessing the migration source volume 1, the host 4 can read and write the desired data.

For example, when an explicit instruction is provided by users such as the system manager and maintenance personnel and the like, and when the preset prescribed data migration conditions are satisfied, data migration from the migration source volume 1 to the migration destination volume 2 is started.

Initially, the entire stored content of the migration source volume 1 is copied to the migration destination volume migration destination volume 2 (S1). This full copy can be conducted within the storage device rather than via the host 4. The migration pointer P1 manages the extent to which migration of the stored content of the migration source volume 1 is completed. Similarly, the migration pointer P2 manages the extent to which migration of the stored content is copied to the migration destination volume 2.

The host 4 can read and write the desired data even while a full copy is conducted. With read access, the control unit 3 reads data from the migration source volume 1 and sends this read data to host 4. Conversely, with write access, the control unit 3 induces write data received from the host 4 to be written to both the migration source volume 1 and migration destination volume 2. Thus, an access request can be received from the host 4 and that access request can be processed even while a full copy is conducted.

FIG. 1B shows the case in which a full copy is complete. Migration of the entire stored content of the migration source volume 1 to the migration destination volume 2 is induced, and the control unit 3 then switches the access destination from the host 4 to the migration destination volume 2 (S2). The control unit 3 manages difference data created in the migration destination volume 2 with the difference data management unit 5 (S3). Difference data is the data updated in the migration destination volume 2 following completion of a full copy, and is the difference in stored content between the migration source volume 1 and the migration destination volume 2. The control unit 3 maintains the correspondence relationship (copy-pair) between the migration source volume 1 and the migration destination volume 2 following completion of a full copy, and manages the difference between the volumes 1 and 2.

When the host 4 access path is switched from the migration source volume 1 to the migration destination volume 2, the performance monitoring unit 6 regularly or irregularly collects the prescribed information and evaluates performance of the migration destination volume 2 (operation status). The timing with which the evaluation is started can match the timing with which management of difference data is started. Or, evaluation of the migration destination volume 2 can also be started after management of difference data is started.

The performance monitoring unit 6 evaluates performance of the migration destination volume 2 with prescribed indices set in accordance with the type of migration destination volume 2. Here, the indices can be, for example, the total number of accesses per unit time, the total number of write accesses per unit time, the total number of read accesses per unit time, the write access cache hit rate, the read access cache hit rate, the data transfer size per unit time, the write data transfer size per unit time, the read data transfer size per unit time, or the total number of random accesses per unit time. One or a plurality of these indices is selected in accordance with the characteristics of the migration destination volume 2, and the migration destination volume 2 is monitored with the selected indices.

As shown in FIG. 1C, as a result of the evaluation by the performance monitoring unit 6 (S4), for example, the migration destination volume 2 is determined to be unsuitable, access is switched again from the migration destination volume 2 to the migration source volume 1.

In this switching stage (restore stage) , the stored content of the migration destination volume 2 and migration source volume 1 are again synchronized. Resynchronization is conducted by copying difference data managed with the difference data management unit 5 to the migration source volume 1 (S5). Thus, this resynchronization is completed in a short time in comparison to the case in which all data is copied. Access requests are received from the host 4 even while a difference copy is conducted (S5). With read access, data is read from the migration destination volume 2 and sent to the host 4. With write access, write data received from the host 4 is written to both the migration source volume 1 and migration destination volume 2.

In this manner, only difference data is copied to the migration source volume 1, and the stored content of both volumes 1 and 2 are synchronized without halting access requests from the host 4. When resynchronization is complete, the control unit 3 switches the access path from the host 4 to the migration source volume 1 (S6).

If selection of the migration destination volume 2 is determined as suitable with the evaluation conducted by the performance monitoring unit 6, the correspondence relationship between the migration source volume 1 and the migration destination volume 2 is terminated in the status shown in FIG. 1B. Furthermore, when the correspondence relationship between both volumes 1 and 2 is terminated, management processing of difference data with the difference data management unit 5 is terminated.

In the present embodiment, performance of the migration destination volume 2 can be monitored based on indices selected in accordance with the type (attributes) of the migration destination volume 2 following migration from the migration source volume 1 to the migration destination volume 2.

When, as a result of performance monitoring by the performance monitoring unit 6, the selection of the migration destination volume 2 is determined to be unsuitable, use of the migration destination volume 2 can be halted, and another value can be selected as the migration destination volume.

In the present embodiment, the copy-pair of the migration source volume 1 and the migration destination volume 2 is maintained, and difference data created in the migration destination volume 2 is managed, even following temporary migration of data from the migration source volume 1 to the migration destination volume 2. Thus, when the host 4 access path to the migration source volume 1 from the migration destination volume 2 is switched, only difference data need be copied to the migration source volume 1. Thus, temporary data migration can be terminated, and the data can be restored to the original migration source volume 1 in a short time.

The present embodiment is described in detail below.

As described below, the storage system of the present embodiment has a storage device 100 which can provide a plurality of types of volumes 164 to a host 10, and a management terminal 20 managing this storage device 100.

The storage device 100 has a plurality of types of disk drives 161 creating a plurality of types of volumes 164, and a control unit 101 controlling communication between the host 10 and each of the disk drives 161, and inducing migration of data between a migration source volume and migration destination volume selected from the plurality of types of volumes 164.

Furthermore, when data is migrated from the migration source volume to the migration destination volume by the storage management unit 21 conducting communication with the control unit 101, and the control unit 101, the management terminal 20 has a monitoring unit 22 monitoring the operation status of the migration destination volume collecting the prescribed information from the control unit 101 via the storage management unit 21

The monitoring unit 22 monitors the operation status of the migration destination volume based on the prescribed indices T10 and T10A in accordance with the type of migration destination volume, and outputs the monitoring results.

Furthermore, in the present embodiment, a plurality of storage devices being the primary storage device 100 and the secondary storage device 200 are provided. By virtualizing the volume 240 of the secondary storage device 200 as an internal volume 164 of the primary storage device 100, the primary storage device 100 incorporates the volume 240.

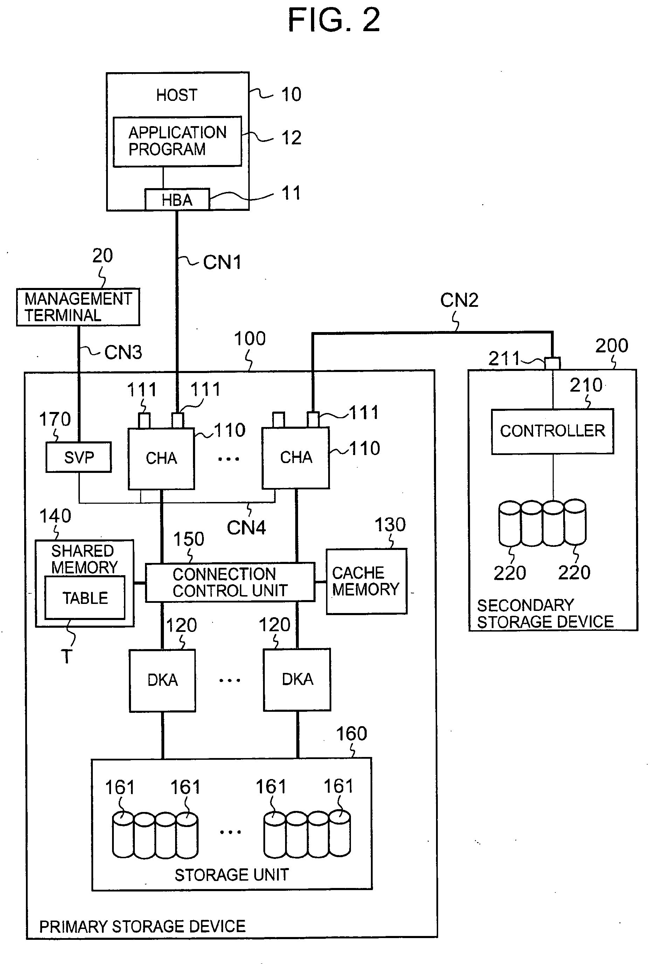

FIG. 2 is a block diagram showing the overall configuration of the storage system. The storage system can, for example, comprise the host 10, the management terminal 20, the primary storage device 100, and the secondary storage device 200.

The host 10 is, for example, a computer device having a CPU (Central Processing Unit), and an information processing resource such as a memory and the like, and can be comprised of, for example, a personal computer, a workstation, or a main frame computer and the like. In the figure, only one host 10 is shown, however in practice, a plurality of hosts 10 can be provided.

The host 10 has an HBA (Host Bus Adapter) 11 for accessing the primary storage device 100 via a communications network CN1, and, for example, an application program 12 such as database software.

The communications network CN1 can employ, for example, a LAN (Local Area Network), a SAN (Storage Area Network), the Internet, a dedicated line, or a public line and the like as appropriate for the situation. With a LAN, for example, data can be transferred in accordance with the TCP/IP protocol. In this case, the host 10 specifies the file name and requests data I/O in units of files.

When the host 10 is connected to the primary storage device 100 via a SAN, the host 10 can transfer data based on the fiber channel protocol. With a SAN, the host 10 requests data I/O with the primary storage device 100 in units of blocks being data management units of the disk drive 161.

When the communications network CN1 is a LAN, the HBA 11 is, for example, a LAN-compatible network card. When the communications network CN1 is a SAN, the HBA 11 is, for example, a host bus adapter.

The management terminal 20 is a computer device for managing the configuration and the like of the storage system, and for example, is operated by a user such as a system manager or maintenance personnel and the like. The management terminal 20 is connected to the primary storage device 100 via a communications network CN3. As described below, the management terminal 20 provides the prescribed instructions to the primary storage device 100 for formation of copy-pairs and data migration and the like.

The primary storage device 100 is, for example, configured as a disk array sub-system. However, the primary storage device 100 is not limited to this, and can, for example, also be configured as a highly functional switch device (fiber channel switch). As described below, the primary storage device 100 may be provided to the host 10 as a logical volume (logical unit) of the storage resources of the secondary storage device 200. The primary storage device 100 therefore need not necessary have an actual volume.

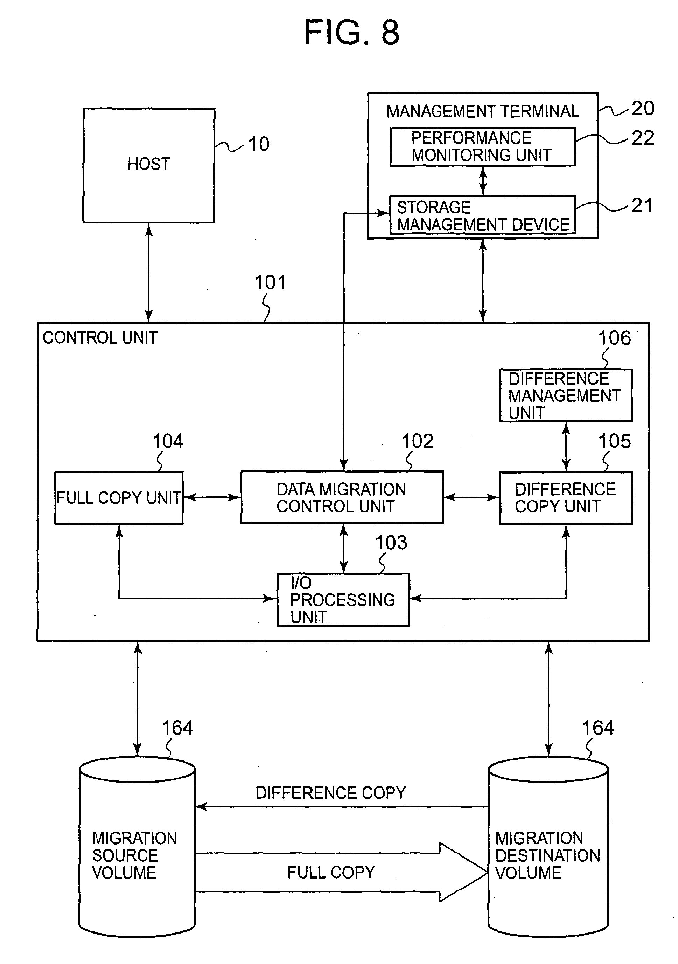

The primary storage device 100 can be broadly classified into a control unit 101 (see FIG. 8) and a storage unit 160. The control unit 101 may, for example, comprise a plurality of channel adaptors (hereafter referred to as 'CHA') 110, a plurality of disk adapters (hereafter referred to as 'DKA') 120, a cache memory 130, a shared memory 140, and a connection control unit 150.

The CHAs 110 conduct data communications with the host 10. Each CHA 110 has at least one communications port 111 for communications with the host 10. Each CHA 110 is configured as a microcomputer system having a CPU and a memory and the like. Each CHA 110 interprets and executes various types of commands such as read commands and write commands and the like received from the host 10.

Each CHA 110 is allocated a network address (for example, an IP address, or a WWN) for identification, and each CHA 110 can act individually as NAS (Network Attached Storage). When a plurality of hosts 10 exist, each CHA 110 individually receives and processes requests from each host 10.

Each DKA 120 sends and receives data to and from the storage unit 160 of the disk drive 161. As with CHAs 110, each DKA 120 is configured as a microcomputer system having a CPU and memory and the like. Each DKA 120, for example, writes data received by the CHA 110 from the host 10, and data read from the secondary storage device 200, to the prescribed disk drive 161. Furthermore, each DKA 120 can also read data from the prescribed disk drive 161, and send that data to the host 10 or the secondary storage device 200. When inputting and outputting data to and from the disk drive 161, each DKA 120 converts the logical address to a physical address.

When the disk drive 161 is managed in accordance with RAID, each DKA 120 conducts data access in accordance with the RAID configuration. For example, each DKA 120 writes the same data to separate disk drive groups (RAID groups) (for example, RAID1), or computes parity and writes data and parity to the disk drive groups (for example, RAID5).

The cache memory 130 stores data received from the host 10 or the secondary storage device 200. Furthermore, the cache memory 130 stores data read from the disk drive 161. As described below, the storage space of the cache memory 130 is used in building a virtual intermediate storage device.

Various types of control information and the like are stored in the shared memory (sometimes referred to as 'control memory') 140 used for operation of the primary storage device 100. Furthermore, a work area is set, and various tables such as the mapping table described below are stored, in the shared memory 140.

One or more disk drives 161 may be used as a cache disk. Furthermore, the cache memory 130 and the shared memory 140 can also be configured as separate memories, a storage area being part of the same memory can be used as a cache area, and another storage area can be used as a control area.

The connection control unit 150 mutually connects each CHA 110, each DKA 120, the cache memory 130, and the shared memory 140. The connection control unit 150 may be configured, for example, as a cross bus switch and the like.

The storage unit 160 has a plurality of disk drives 161. The disk drives 161 can, for example, use various types of storage devices such as hard disk drives, flexible disk drives, magnetic tapedrives, semiconductormemorydrives, andopticaldiskdrives and the like, and equivalent objects. Furthermore, for example, differing types of disks such as FC (Fiber Channel) disks and SATA (Serial AT Attachment) disks and the like can be mixed within the storage unit 160.

In the present embodiment, an example in which an FC disk and a SATA disk are mixed within the storage system is described. A plurality of types of disk drive mixed within the storage system can be, for example, (1) the case in which the storage device units are differing types of disk drives such as when the disk drive 161 of the primary storage device 100 is an FC disk, and the disk drive 220 of the secondary storage device 200 is an SATA disk, or (2) the case in which differing types of disk drives are mounted in at least one of the storage devices 100 and 200.

The service processor (SVP) 170 is connected to each CHA 110 via the internal network CN4 of a LAN and the like. The SVP 170 can transfer data to and from the shared memory 140 and the DKA 120 via the CHA 110. The SVP 170 collects various information within the primary storage device 100, and provides it to the management terminal 20.

The secondary storage device 200 is comprised of, for example, a controller 210, and a plurality of disk drives 220. The secondary storage device 200 is connected from the communications port 211 to the primary storage device 100 via the communications network CN2. The communications network CN2 can be comprised of, for example, a SAN and a LAN and the like.

The secondary storage device 200 can be of approximately similar configuration to that of the primary storage device 100, or can be of simpler configuration than the primary storage device 100. All or part of the disk drive 220 of the secondary storage device 200 is handled as an internal storage device of the primary storage device 100.

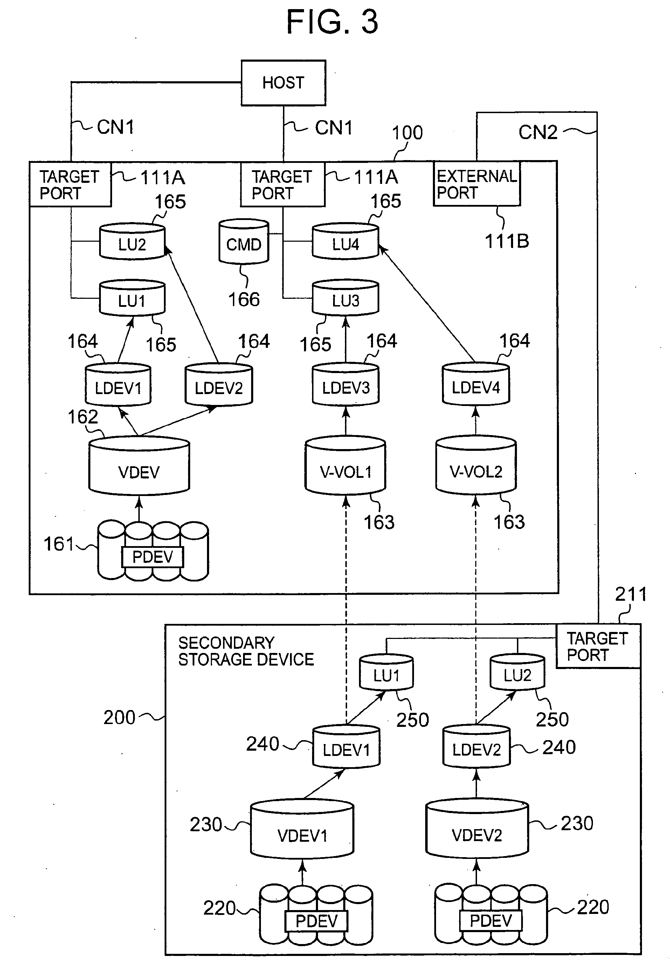

Refer to FIG. 3. FIG. 3 is a diagram showing the storage structure of the storage system. The description begins with the configuration of the primary storage device 100.

The storage structure of the primary storage device 100 can be broadly classified into, for example, a physical storage layer and a logical storage layer. The physical storage layer is comprised of a PDEV (Physical Device) 161 being a physical device. The PDEV corresponds to the disk drive 161.

The logical storage layer may comprise a plurality of layers (for example, two layers). One logical layer may comprise a VDEV (Virtual Device) 162 and a virtual VDEV (hereafter also referred to as a 'V-VOL') 163 handled as a VDEV 162. Another logical layer can comprise an LDEV (Logical Device) 164.

The VDEV 162 is comprised of prescribed numbers of PDEVs 161 grouped together, for example, one group of four (3D + 1P), or one group of eight (7D + 1P). The storage areas provided by each PDEV 161 belonging to a group are aggregated to form one RAID storage area. This RAID storage area is the VDEV 162.

In contrast to the VDEV 162 being built on the physical storage area, the V-VOL 163 is a virtual intermediate storage device not requiring a physical storage area. The V-VOL 163 is not directly related to a physical storage area, but is a location for mapping the LUs (Logical Unit) of the secondary storage device 200.

At least one LDEV 164 can be provided on the VDEV 162 or the V-VOL 163. The LDEV 164 can, for example, be comprised by dividing the VDEV 162 into fixed lengths. When the host 10 is an open host, the host 10 recognizes the LDEV 164 as a single physical disk by the LDEV 164 being mapped to the LU 165. The open host accesses the desired LDEV 164 by specifying a LUN (Logical Unit Number) and a logical block address. With a mainframe host, the LDEV 164 is recognized directly.

The LU 165 may be a device recognizable as an SCSI logical unit. Each LU 165 is connected to the host 10 via a target port 111A. At least one LDEV 164 can be associated with each LU 165. The LU size can be virtually expanded by associating a plurality of LDEVs 164 with one LU 165.

The CMD (Command Device) 166 is a dedicated LU employed to transfer commands and statuses between the I/O control program running on the host 10 and the control unit 101 of the primary storage device 100. Commands from the host 10 are written to the CMD 166. The control unit 101 executes processing in response to commands written to the CMD 166, and writes the results of this execution to the CMD 166 as a status. The host 10 reads the status written to the CMD 166, verifies the status, and writes the content of the next processing to be executed to the CMD 166. Thus, the host 10 can provide various instructions to the primary storage device 100 via the CMD 166.

The control unit 101 can also directly process commands received from the host 10 without storing these commands in the CMD 166. Furthermore, the CMD may also be created as a virtual device without defining an actual device (LU), and configured to process commands received from the host 10. In other words, for example, the CHA 110 writes commands received from the host 10 to the shared memory 140, and the CHA 110 or DKA 120 process commands stored in this shared memory 140. This processing result is written to the shared memory 140, and sent from the CHA 110 to the host 10.

The secondary storage device 200 is connected to the external connection initiator port (External Port) 111B of the primary storage device 100 via the communications network CN2.

The secondary storage device 200 has a plurality of PDEVs 220, a VDEV 230 set in the storage area provided by the PDEVs 220, and at least one LDEV 240 which can be set in the VDEV 230. Each LDEV 240 is associated with an LU 250. The PDEV 220 is equivalent to the disk drive 220 in FIG. 2.

The LU 250 of the secondary storage device 200 (in other words, the LDEV 240) is mapped to the virtual intermediate storage area device V-VOL 163. For example, 'LDEV 1' and 'LDEV 2' of the secondary storage device 200 are mapped to 'V-VOL 1' and 'V-VOL 2' of the primary storage device 100 respectively via 'LU 1' and 'LU 2' of the secondary storage device 200. 'V-VOL 1' and 'V-VOL 2' are mapped to 'LDEV 3' and 'LDEV 4' respectively, and the host 10 may use these volumes via 'LU 3' and 'LU 4'.

The RAID configuration can be applied to VDEV 162 and V-VOL 163. In other words, the single disk drive 161 can be allocated to a plurality of VDEVs 162 and V-VOLs 163 (slicing), and single VDEVs 162 and V-VOLs 163 can also be formed from a plurality of disk drives 161 (striping).

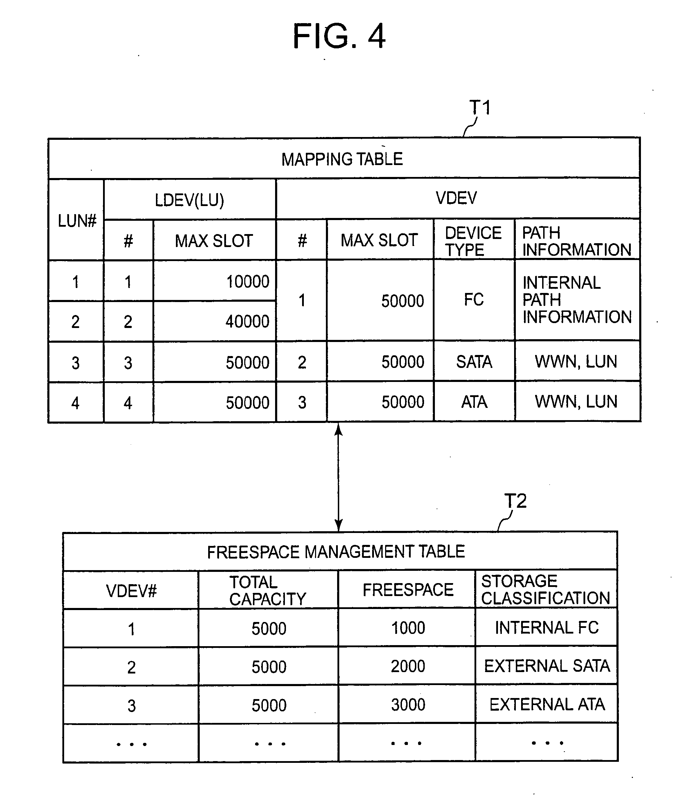

FIG. 4 shows a mapping table T1 for incorporating the volume 240 of the secondary storage device 200 (hereafter referred to as the 'external volume 240') as an internal volume of the primary storage device 100.

The mapping table T1 can be formed by, associating, for example, the LUN number, information related to the LDEV, and information related to the VDEV.

Information related to the LDEV can be, for example, the LDEV number and capacity ('MAX SLOT number' in figure). Information related to the VDEV can be, for example, the VDEV number, capacity, device type, and path information. Here, V-VOL 163 information is included in information related to VDEV.

'Device type' can include, for example, information indicating whether the device is a tape device or a disk device, and the type of disk (FC disk, SATA disk and the like). 'Path information' includes, for example, information for accessing the VDEV. When the VDEV is associated with an external volume (in other words, with a V-VOL), the path information includes, for example, unique identification information (WWN) for each communications port 211, and a LUN number to identify the LU 250.

By using such a mapping table T1, one or a plurality of external disk drives 220 can be mapped to the V-VOL 163 within the primary storage device 100. Other tables shown below are similar in that the volume numbers and the like in the table are illustrations for describing the table configuration, and have no particular association with the configuration in FIG. 3 and the like.

The freespace management table T2 is also shown in FIG. 4. The freespace management table T2 manages the usage status of the storage resources existing in the storage system. The freespace management table T2 can be configured by associating, for example, the VDEV number, the total capacity of the VDEV, the freespace in the VDEV, and the device type set for the VDEV (storage classification).

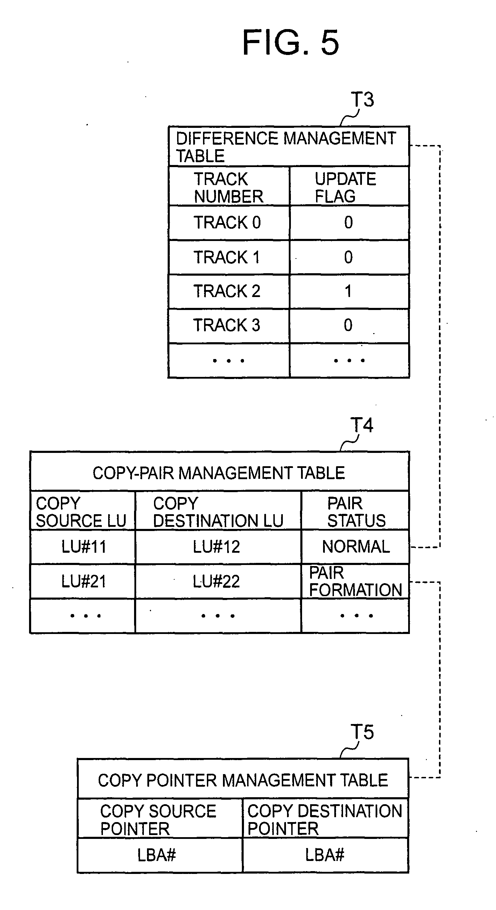

FIG. 5 is a diagram showing the configuration of the table group used when data is copied between a plurality of volumes.

The difference management table T3 is used to manage updates occurring in the target volume at or after a certain time. The difference management table T3 may be configured by associating, for example, the track number and the update flag. Other management units such as the block address and the like may be used in place of the track number. The update flag is information indicating whether or not the management unit storage area data has been updated. For example, when data is updated, the update flag is set to '1'. When data has not been updated, the update flag value is '0'.

The copy-pair management table T4 is used to manage copying between volumes. The copy-pair management table T4 can be configured by associating, for example, information identifying the copy source volume, information identifying the copy destination volume, and information indicating the pair status. The pair status can be, for example, 'pair formation' or 'pair termination (normal)' and the like.

The copy pointer management table T5 is a table used when copying all data between volumes. As described above, a full copy is the copying of all stored content on the copy source volume as is to the copy destination volume. The copy pointer management table T5 can be configured, to include, for example, information indicating the copy source pointer address and information indicating the copy destination pointer address. When a plurality of full copies is conducted, a copy pointer management table T5 is prepared for each full copy.

Each pointer indicates the progress of the full copy. Each pointer address changes as the full copy progresses. The range between the copy start address and the address indicated by the pointer is the range of the completed copy.

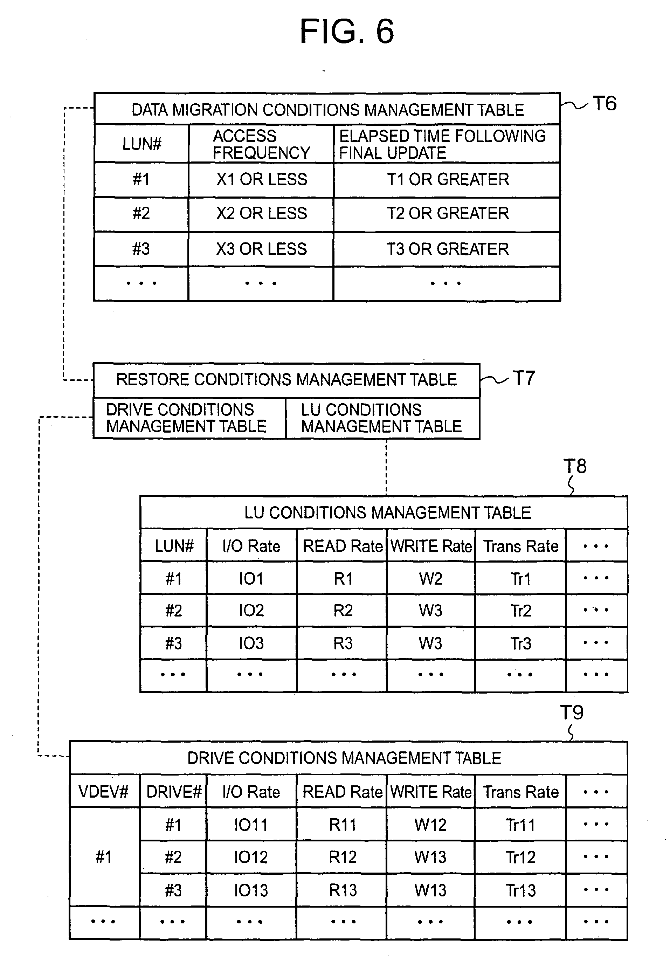

FIG. 6 is a diagram showing the table group used in the data migration. The data migration conditions management table T6 manages the conditions for transferring data from one volume to another volume. In other words, the table T6 manages the conditions for starting data migration.

This table T6 is configured by associating, for example, information for identifying the target volume (LUN number) with the data migration execution conditions for that volume. The data migration execution conditions can be, for example, access frequency, and elapsed time from the time of final update.

The value of the information in a volume for which the access frequency drops to equal to or less than the prescribed value is considered to have deteriorated, and this data can be transferred to a lower speed disk. Similarly, the value of the information in a volume not accessed for the prescribed time or longer following the final update can also be considered to have deteriorated, and this data is transferred to a lower speed disk. Thus, wasteful consumption of storage resources of high-speed drives by volumes for which the value of the information has comparatively deteriorated can be suppressed. The above conditions are an example, and other conditions can also be set.

The restore conditions management table T7 manages the conditions for canceling data migration once executed, and restoring the status prior to execution of data migration. The restore conditions management table T7 can have, for example, the LU conditions management table T8 and the drive conditions management table T9. Both the tables T8 and T9 need not be present, and a configuration having only one is possible.

The LU conditions management table T8 manages the threshold values related to performance of data migration destination volumes. This table T8 can be configured by associating, for example, information (LUN number) for identifying each volume, and threshold values for each managed performance item. The performance items can be, for example, the number of I/O cycles per unit time (I/O rate), the number of read access cycles per unit time (READ rate), the number of write access cycles per unit time (WRITE rate), and the data transfer size per unit time (Trans rate).

Threshold values are set for each of these performance items. When an actual measured value for a certain performance item is greater or less than the threshold value, the selection of the migration destination volume is considered to have been unsuitable at least for that performance item. However, the determination of whether or not the selection of a migration destination volume was suitable can be conducted in a comprehensive manner based on the relationship of the measured values and threshold values for all performance items.

The drive conditions management table T9 manages threshold values related to performance of the disk drive 161 (or the disk drive 220) in which the migration destination volume is built. This table T9 can be configured by associating, for example, the VDEV number, the drive number, and the threshold values for each performance item. The logical volume to which the disk drive is related can be identified by the VDEV number and drive number.

The items provided as examples in, for example, the LU conditions management table T8, can be employed as performance items. The performance items in the tables T8 and T9 need not be the same, and these tables can also manage differing performance items.

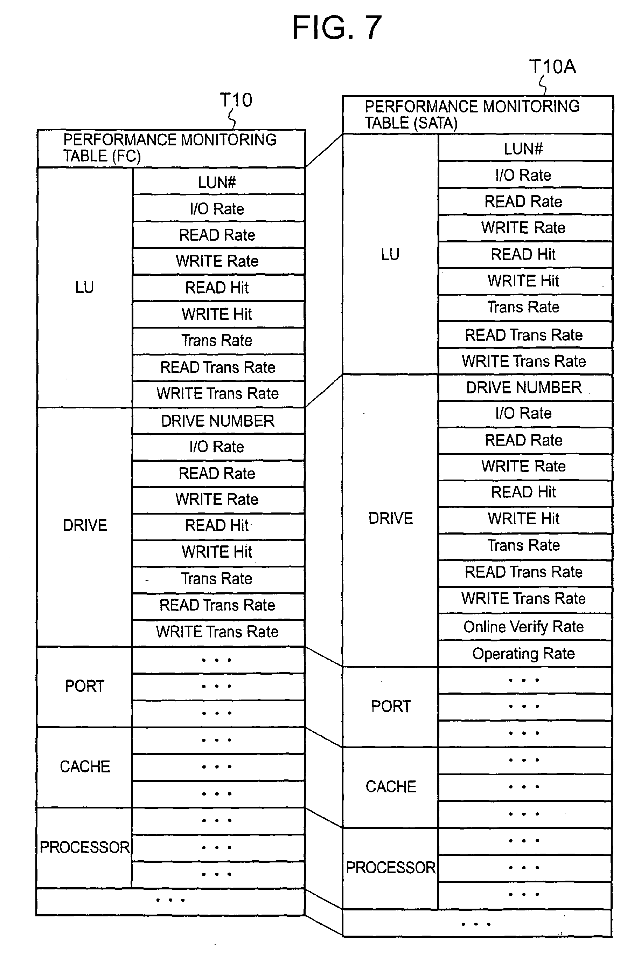

FIG. 7 shows the tables T10 and T10A for monitoring performance of a volume and the like. The performance of the volume is monitored for the items registered in these tables T10 and T10A monitoring these performance items.

The table T10 can be used for monitoring the performance of a volume provided on an FC disk. The other table T10A can be used for monitoring the performance of a volume provided on an SATA disk.

These tables T10 and T10A can be, for example, broadly classified into 'LU', 'Disk Drive', 'Port', 'Cache', and 'Processor' and the like, and each major category can include a plurality of performance items.

The major item 'LU' can include 'LUN number', 'I/O Rate', 'READ Rate' , 'WRITE Rate' , 'READ Hit' , 'WRITE Hit' , 'Trans Rate', 'READ Trans Rate', and 'WRITE Trans Rate'. Here, 'READ Hit' indicates the read command hit rate. 'WRITE Hit' indicates the write command hit rate. 'READ Trans Rate' indicates the read data transfer size per unit time, and 'WRITE Trans Rate' indicates the write data transfer size per unit time.

Themajoritem 'Disk Drive (abbreviatedas 'Drive' infigure) can include, for example, 'Drive number', 'I/O Rate', 'READ Rate', 'WRITE Rate' , 'READ Hit' , 'WRITE Hit' , 'Trans Rate', 'READ Trans Rate', and 'WRITE Trans Rate'. Additionally, the table T10A can also include 'Online Verify Rate' and 'Operating Rate'. 'Online Verify Rate' indicates the number of online verify command cycles conducted per unit time. 'Operating Rate' is the drive operating rate.

Online verify in the present embodiment is processing to read data written to a SATA disk immediately following write, and compare that data with write data in the cache memory 130. Online verify can be conducted only for disks of low reliability such as SATA disks. This is described in further detail below.

In addition to the afore-mentioned items, for example, other items such as the Random Access Rate and the Random Write Access Rate and the like can also be employed for SATA disks. Thus, in the present embodiment, performance monitoring indices can be selected according to the volume configuration (disk type).

FIG. 8 is a diagram focusing on the configuration of the primary functions of the storage system. The control unit 101 can be comprised of each CHA 110 and each DKA 120 of the primary storage device 100, the cache memory 130, and the shared memory 140 and the like.

As an internal function, the control unit 101 can have, for example, a data migration control unit 102, an I/O processing unit 103, a full copy unit 104, a difference copy unit 105, and a difference management unit 106.

The data migration control unit 102 is a function controlling execution and restore for data migration by using, for example, the data migration conditions management table T6 and the restore conditions management table T7.

The I/O processing unit 103 is a function for processing write access and read access from the host 10. The full copy unit 104 is a function for inducing copying of all data between a specified plurality of volumes by using the copy-pair management table T4 and the copy pointer management table T5. The difference copy unit 105 is a function for inducing copying of difference data between a specified plurality of volumes by using the copy-pair management table T4 and the difference management table T3. The difference management unit 106 is a function for managing difference data using the difference management table T3.

The following description focuses on the functional configuration of the management terminal 20. The management terminal 20 can have, for example, a storage management unit 21, and a performance monitoring unit 22. The storage management unit 21 provides instructions to the control unit 101 for formation of copy-pairs and data migration and the like. The storage management unit 21 can acquire various types of information from SVP 170.

The performance monitoring unit 22 is a function for monitoring the performance (for example, volume performance) of the primary storage device primary storage device 100. The performance monitoring unit 22 can acquire actual measured values related to the indices shown in table 10 and 10A from the control unit 101 via the storage management unit 21. The performance monitoring unit 22 can provide instructions related to execution and restore for data migration to the control unit 101 based on the data migration conditions management table T6 and restore conditions management table T7. The performance monitoring unit 22 is not limited to being provided in the management terminal 20, and can also be provided within the control unit 101.

As described in detail below, in the present embodiment, full copy is used when data migration is executed. When this data migration is cancelled and the original state restored, difference copy is used.

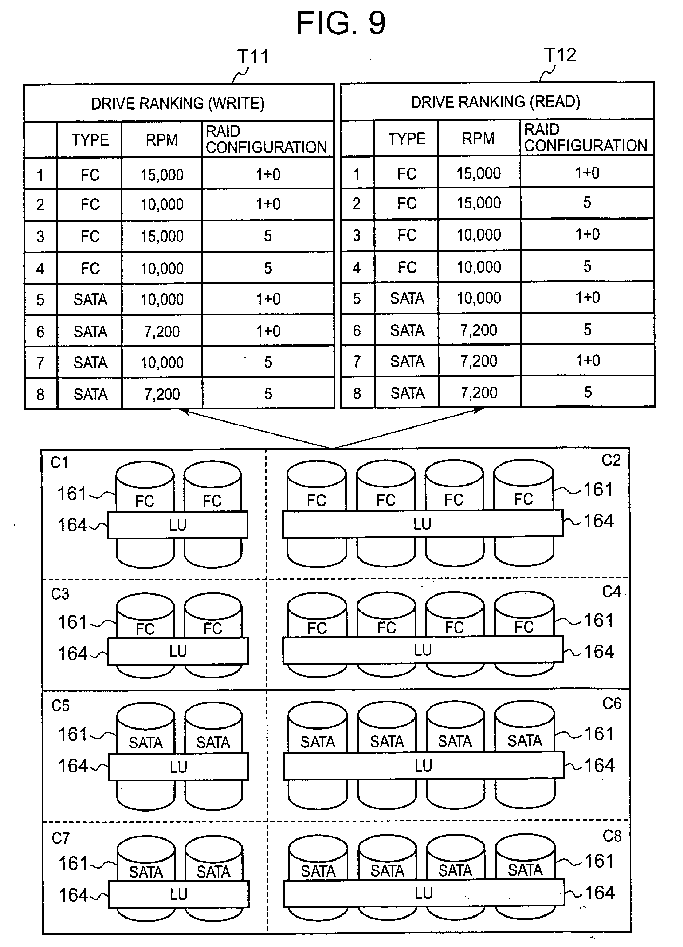

FIG. 9A to 9B is a diagram showing ranking of the storage resources of the storage system. As described above, the storage system can provide a plurality of types of volumes to the host 10. Each volume has a plurality of attributes, and by combining these attributes, a plurality of types of volumes are created.

The first attribute is the disk drive type. In the present embodiment, the disk drive type is for example, an FC disk or a SATA disk. The second attribute is the disk drive speed. In the present embodiment, disk drive speed is, for example, 15,000rpm and 10,000rpm for FC disks, and 10,000rpm and 7,200rpm for SATA disks. The third attribute is the RAID configuration type. In the present embodiment, for example, RAID1+0 and RAID5 can be the RAID configuration types.

RAID1+0 is a combination of RAID1 (mirroring) and RAID0 (striping). RAID5 splits data, generates parity from the split data, and distributes and stores the split data groups and parity among a plurality of drives.

The afore-mentioned three attributes have a plurality of values. In the present embodiment, a total of eight types of groups C1 through C8 as follows exist.
(C1) A group having high-speed (15,000rpm) FC disks, with a RAID1+0 configuration.
(C2) A group having high-speed FC disks, with a RAID5 configuration.
(C3) A group having low-speed (10,000rpm) FC disks, with a RAID1+0 configuration.
(C4) A group having low-speed FC disks, with a RAID5 configuration.
(C5) A group having high-speed (10,000rpm) SATA disks, with a RAID1+0 configuration.
(C6) A group having high-speed SATA disks, with a RAID5 configuration.
(C7) A group having low-speed (7,200rpm) SATA disks, with a RAID1+0 configuration.
(C8) A group having low-speed SATA disks, with a RAID5 configuration.

Generally, the data write speed and read speed for FC disks is greater than for SATA disks. Furthermore, since the time to reach the target sector is reduced as the speed of rotation increases, the data write speed and read speed can be increased. With the RAID1+0 configuration, the same data is simply written to a plurality of disk drives, without the need to compute parity and the like. Data write speed is therefore higher for the RAID1+0 configuration than for the RAID5 configuration.

The ranking table T11 shows a ranking when processing write access based on the afore-mentioned characteristics. This table T11 lists volume configurations in order of increasing speed with which write commands may be processed. Similarly, the table T12 lists volume configurations in order of decreasing time with which read commands can be processed.

At both write access and read access, the volume configuration of the group C1 (high-speed FC disks, RAID1+0 configuration) has the shortest processing time. However, as is apparent from a comparison of the ranking tables T11 and T12, the rankings for other than the group C1 differ for write access and read access.

This is due to the write penalty. When write data is written to a disk drive group operated with RAID5, since the old parity must be read and new parity computed, processing is slowed by the amount of time necessary for this parity computation. This delay is referred to as the 'write penalty'. Thus, since the write penalty occurs with RAID5, processing time at write access is increased. Conversely, since parity computation is unnecessary at read access, the effects of differences due to RAID configuration are comparatively small. Thus, a difference occurs between the ranking for write access and the ranking for read access.

The reasons for processing time for FC disks being shorter than for SATA disks at both write access and read access is described below. Even when the speed of rotation for an FC disk and an SATA disk is the same, the processing time for the FC disk is shorter.

One reason is that the FC disk allows multiplexed processing of a plurality of commands, while commands must be processed one-at-a-time with the SATA disk.

The second reason is that, since the reliability of the SATA disk is low, seek time is increased. With the SATA disk, the head is not stationary on the disk for long periods of time, and by retracting the head to the outside of the disk (head unload) , stress on the head is reduced and damage to sectors is avoided. Thus, seek time is increased.

The third reason is that, since reliability of the SATA disk is low, write data must be read back and checked, as described below. Processing with the SATA disk is therefore delayed to the extent that this write data is read back and checked.

Performance and reliability of the FC disk and SATA disk differ as described. While the FC disk is used, for example, as an online volume operating 24 hours per day and 365 days per year, the SATA disk is commonly used, for example, as a backup volume.

The ranking tables T11 and T12 can be used in execution of data migration. For example, user decisions can be supported by displaying all or part of the content of the ranking tables T11 and T12 on the terminal screen of the management terminal 20. Furthermore, when autonomously conducting data migration with the storage management unit 21 and the like, by referencing the tables T11 and T12, the migration destination volume can also be selected in accordance with data migration policy.

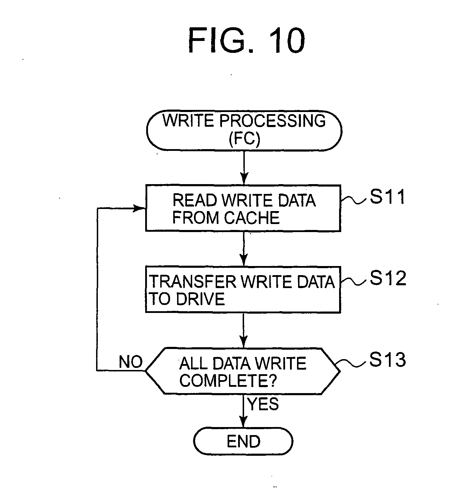

FIG. 10 is a flowchart showing an outline of processing (destage processing) when data is written to the FC disk.

Firstly, the control unit 101 reads write data from the cache memory 130 (S11), and transfers this write data to the prescribed disk drive (S12). When operated with RAID1+0, the same write data is transferred to two groups of disk drives each comprised of a plurality of disk drives. When operated with RAID5, old parity is read prior to transfer of the write data, new parity is computed, and write data and parity are then transferred to the prescribed disk drive.

The control unit 101 repeats steps S11 and S12 until all write data being the target of the current write processing is written to the prescribed disk drive group (NO in S13).

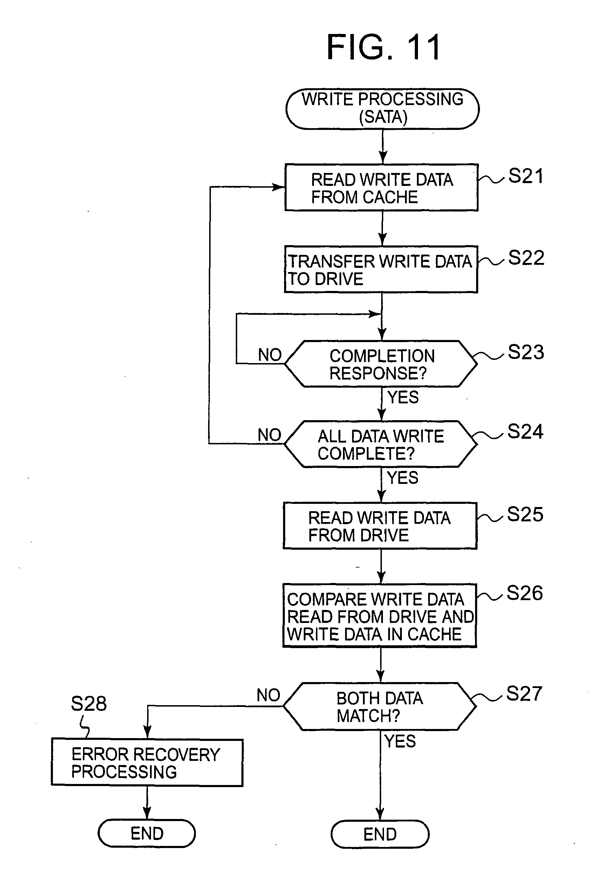

FIG. 11 is a flowchart showing an outline of processing when data is written to a SATA disk.

Firstly, the control unit 101 reads write data from the cache memory 130 (S21), and transfers this write data to the prescribed disk drive group (S22). The control unit 101 waits to receive a response indicating write complete from the disk drive (S23). When write complete (YES in S23) is verified, the control unit 101 determines whether or not all write data subject to the current write processing has been written (S24). The control unit 101 repeats steps S21 through S23 until all write data has been written to the disk drive (NO in S24).

When writing of all write data is complete, (YES in S24), the control unit 101 reads write data written in the previous step S22 from the disk drive group (S25). The control unit 101 compares the data read from the disk drive and the write data remaining in the cache memory 130 (S26).

When both data match (YES in S27), the control unit 101 determines that data has been written normally, and terminates processing. Conversely, when both data do not match (NO in S27), the control unit 101 determines that data has not been written normally, and conducts error recovery processing (S28).

As error recovery processing, the control unit 101 can, for example, select another disk drive group and write write data to that disk drive group, or rewrite write data to the disk drive group, and the like.

As described above, write processing differs between FC disks and SATA disks, processing with SATA disks being more complex. Thus, with SATA disks, time for processing write commands is increased.

Particularly with random write, since write data is written to the SATA disk sporadically, write data is read back and verification processing (S25 through S27) executed with each write access. Overheads are readily increased since this write data is read back for verification processing.

Conversely, with sequential write in which contiguous data is written to a disk drive, after a certain amount of write data is written that write data may be read back together for verification. Thus, the number of cycles of this verification processing (S25 through S27) is reduced and overheads are comparatively small.

Thus, with SATA disks, write access processing performance is less than with FC disks. In particular, random write access processing performance for SATA disks is considerably less than for FC disks.

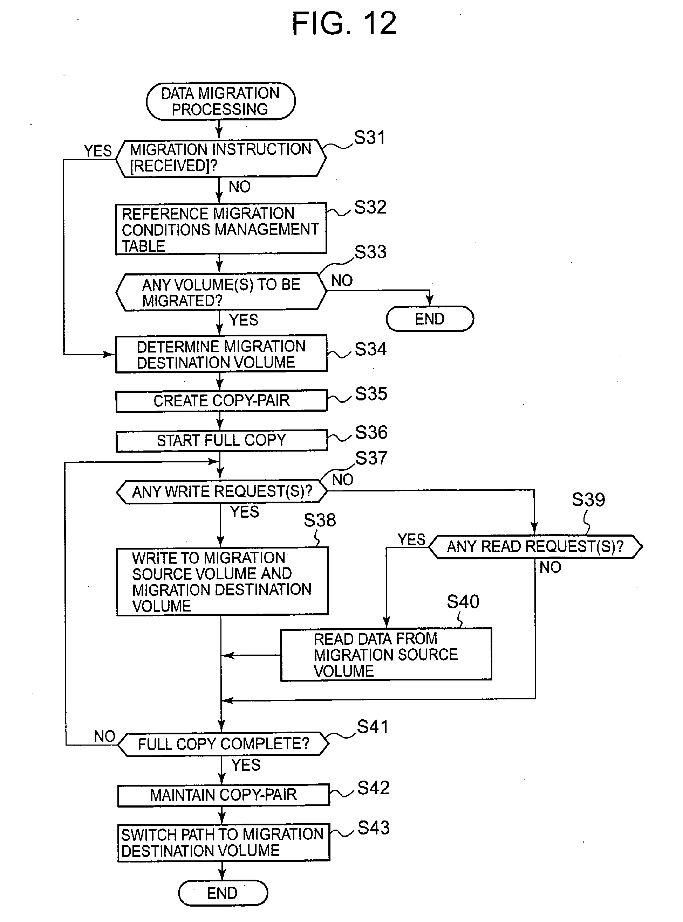

FIG. 12 is a flowchart showing an outline of data migration processing. This data migration processing is conducted jointly by the management terminal 20 and the primary storage device 100. Here, for the purposes of the description, S31 through S35 are executed by the storage management unit 21 of the management terminal 20, and subsequent steps S36 through S43 are executed by the control unit 101 of the primary storage device 100.

The storage management unit 21 determines whether or not execution of data migration has been instructed manually by the user (S31). If data migration has been instructed by the user (YES in S31), processing moves to S34 described below.

If data migration has not been instructed by the user (NO in S31), the storage management unit 21 references the data migration conditions management table T6 (S32), and determines whether or not there is a volume to be moved (S33). If there is no volume satisfying the conditions referenced in the table T6 (NO in S33), the storage management unit 21 terminates data migration.

Conversely, when a volume satisfying the conditions referenced in the table T6 (YES in S33) is found, the storage management unit 21 determines the migration destination volume (S34) based on the preset data migration policy and the like. The data migration policy can be set based on, for example, the type of data stored in the migration source volume and the attributes of the migration destination volume and the like.

For example, when archiving electronic mail data stored in an FC disk, an unused volume built on a SATA disk is selected as the migration destination volume. Since the frequency of use of electronic mail data is low after the prescribed time has elapsed, this electronic mail data may be migrated to a SATA disk of slow processing speed without hindrance. Furthermore, as a further example, when a certain degree of use is expected even after data migration, the electronic mail data can also be migrated from the FC disk group operated with the RAID1+0 configuration to an FC disk group operated with the RAID5 configuration. In this case, an unused RAID5 volume built with the prescribed number of FC disks is selected as the migration destination volume.

When the storage management unit 21 selects the migration destination volume, creation of a copy-pair of a migration source volume and a migration destination volume is induced (S35). When the copy-pair creation instruction is received from the storage management unit 21, the control unit 101 induces creation of a copy-pair of the specified migration source volume and specified migration destination volume.

The control unit 101 induces full copy of all data stored in the migration source volume (user data) to the migration destination volume (S36). With this full copy, the data is read in the prescribed amount of data at-a-time from the migration source volume, and written to the migration destination volume via the cache memory 130. The progress of the copy is managed with the copy pointer management table T5.

Data copying between the migration source volume and the migration destination volume is conducted within the primary storage device 100, or between the primary storage device 100 and secondary storage device 200. In other words, the host 10 does not contribute to this data migration. Data migration can therefore be executed without increasing the processing load on the host 10.

Access is sometimes requested from the host 10 prior to completion of data migration from the migration source volume to the migration destination volume. In the present embodiment, access requests from the host 10 may be processed during data migration.

When a write command is issued from the host 10 during data migration (YES in S37), the control unit 101 induces writing of write data received from the host 10 to both the migration source volume and the migration destination volume (S38). This multiplexed write is conducted with or without write access to the copying completed area.

Conversely, with write access to the copying completed area, when write data is written only to the migration destination volume, and write access is to the not yet copied area, a configuration is possible in which write data is written only to the migration source volume. However, in the present embodiment, the configuration in which write data is written to both the migration source volume and the migration destination volume irrespective of whether or not it is the copied area can simplify the control structure.

On the other hand, when a read command is received from the host 10 during data migration (NO in S37, YES in S38), the control unit 101 reads requested data from the migration source volume and sends the read data to the host 10 (S40). When data requested from the host 10 exists in the cache memory 130, the cached data can be sent to the host 10 without accessing the disk drive.

Data is read from the migration source volume being the copy source volume, with or without write access to the copying completed area, and transferred to the host 10. Conversely, a configuration may also be used in which data is read from the migration destination volume with read access to the copying completed area, and data is read from the migration source volume with read access to the not yet copied area.

Thus, while processing write access and read access requests from the host 10 (S37 through S40), the control unit 101 continues copying data from the migration source volume to the migration destination volume (S41). When copying of all data from the migration source volume to the migration destination volume is complete (YES in S41), the control unit 101 switches the host 10 access path from the migration source volume to the migration destination volume (S43) while the maintaining the copy-pair of the migration source volume and migration destination volume.

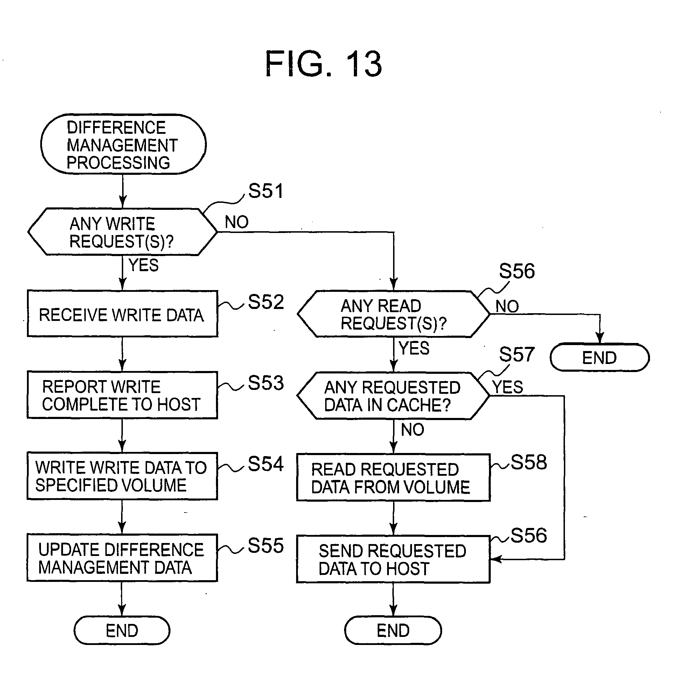

FIG. 13 is a flowchart showing difference management processing executed following completion of a full copy from the migration source volume to the migration destination volume.

Even when the access path of the host 10 is switched from the migration source volume to the migration destination volume, the control unit 101 manages difference data without terminating the copy-pair of the migration source volume and migration destination volume.

After the access path is switched to the migration destination volume, the control unit 101 determines whether or not a write command has been issued from the host 10 (S51) . When a write command has been issued (YES in S51), the control unit 101 receives write data from the host 10 (S52), and stores that write data in the cache memory 130. The control unit 101 reports write complete to the host 10 (S53), and induces writing of the write data to the migration destination volume (S54).

The control unit 101 then sets the update flag corresponding to the updated position to '1', and induces updating of the difference management table T3 (S55). A synchronized method may also be employed in which the control unit 101 reports write complete to the host 10 after verifying the writing of write data to the disk drive group related to the migration destination volume. However, since it is necessary to wait for write complete from the disk drive with the synchronized method, the speed of processing write commands is reduced.

When a read command is issued from the host 10 (NO in S51, YES in S56), the control unit 101 determines whether or not the requested data exists in the cache memory 130 (S57). When the requested data is not in the cache memory 130 (NO in S57), the control unit 101 reads the data from the migration destination volume (S58) and sends that data to the host 10 (S59) . Conversely, when the requested data is stored in the cache memory 130 (YES in S57), the control unit 101 sends that data to the host 10 (S59).

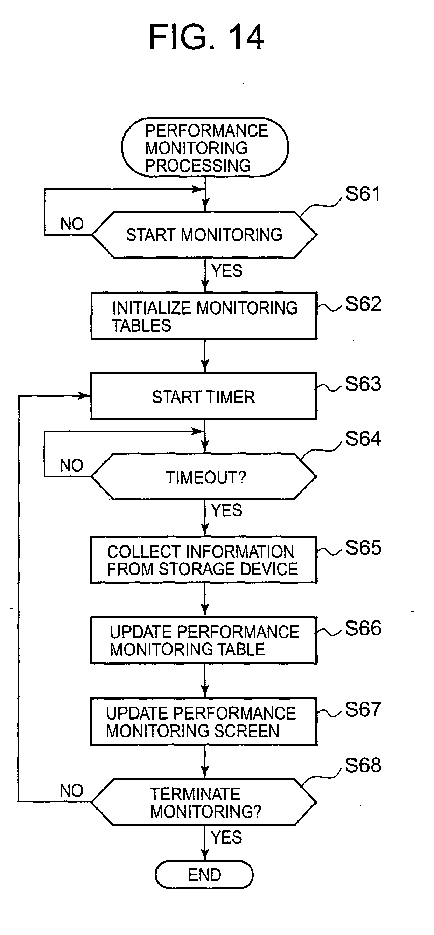

FIG. 14 is a flowchart showing performance monitoring processing executed with the performance monitoring unit 22 of the management terminal 20.

The performance monitoring unit 22 determines whether or not to start monitoring (S61). When, for example, performance monitoring has been instructed manually by the user, the performance monitoring unit 22 starts monitoring. Or, the performance monitoring unit 22 can also automatically start monitoring when data migration processing is complete.

When the performance monitoring unit 22 starts monitoring (YES in S61), the performance monitoring table T10A corresponding to the monitoring target is initialized (S62). In the present embodiment, the case in which data is migrated from an FC disk to a SATA disk is used as an example for the description.

The performance monitoring unit 22 starts the timer regulating the monitoring interval (S63). The performance monitoring unit 22 then waits for the prescribed time to elapse (YES in S64), and acquires information from the primary storage device 100 (S65). In other words, the performance monitoring unit 22 acquires information related to each performance item registered in the performance monitoring table T10A from the primary storage device 100.

The performance monitoring unit 22 induces update of the performance monitoring table T10A based on the information acquired from the primary storage device 100 (S66). Furthermore, the performance monitoring unit 22 induces update of the performance monitoring screen displayed on the terminal screen of the management terminal 20 (S67). An example of the performance monitoring screen is described below. When the performance monitoring screen is not displayed, the step S67 is omitted.

The performance monitoring unit 22 determines whether or not to terminate monitoring processing. Processing termination determination can be conducted based on an instruction from the user, or on execution of a separate program, as with processing start determination. In the latter case, monitoring processing can be terminated, for example, when restore processing described below is completed, and when data migration confirmation processing is completed.

When continuing monitoring processing (NO in S68), the performance monitoring unit 22 acquires information from the primary storage device 100 (S65) at the prescribed time intervals (S63, S64), and induces update of the performance monitoring table T10A (S66).

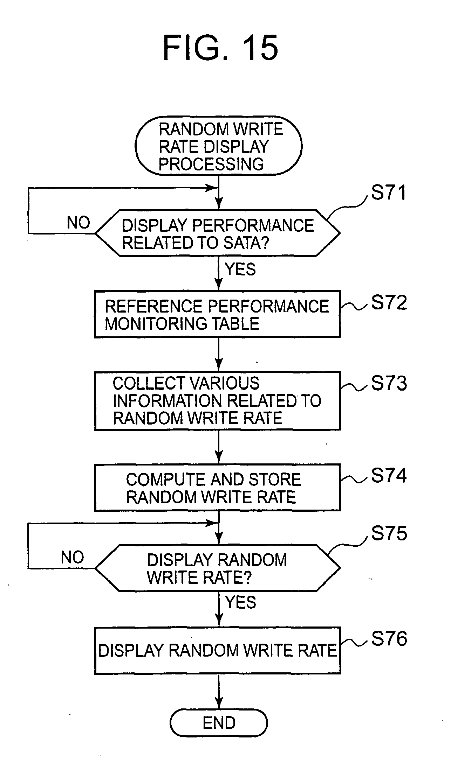

FIG. 15 is a flowchart showing processing when the random write rate is computed. This processing is executed with the performance monitoring unit 22.

Information related to the random write rate is useful when a migration destination volume is created based on a SATA disk. This is due to the fact that, as described above, random write processing performance with a SATA disk is particularly low in comparison with an FC disk.

In the present embodiment, the random write rate is computed as necessary, and displayed on the management terminal 20 screen. 'As necessary' is, for example, when an explicit request is received from a user, and when a migration destination volume is created on a SATA disk. Thus, the random write rate is not computed unnecessarily, and the load on the management terminal 20 can be reduced. On the other hand, a configuration in which the random write rate is continually computed may be used.

The performance monitoring unit 22 determines whether or not performance display related to the SATA disk has been requested (S71). When performance display related to the SATA disk itself, or a volume created on a SATA disk, is requested (YES in S71), the performance monitoring unit 22 references the performance monitoring table T10A (S72).

The performance monitoring unit 22 obtains information related to computation of the random write rate from the performance monitoring table T10A (S73). Information related to the random write rate can be, for example, 'WRITE Rate' , 'WRITE Hit', and 'WRITE Trans Rate'.

The performance monitoring unit 22 computes the random write rate (S74), and stores the random write rate in the management terminal 20 memory or on the local disk. When display of the random write rate is requested by the user (YES in S75), the performance monitoring unit 22 calls the stored random write rate and displays the stored random write rate on the terminal screen (S76).

The random write rate need not necessarily be computed exactly, and an accuracy sufficient to grasp the trend is satisfactory.

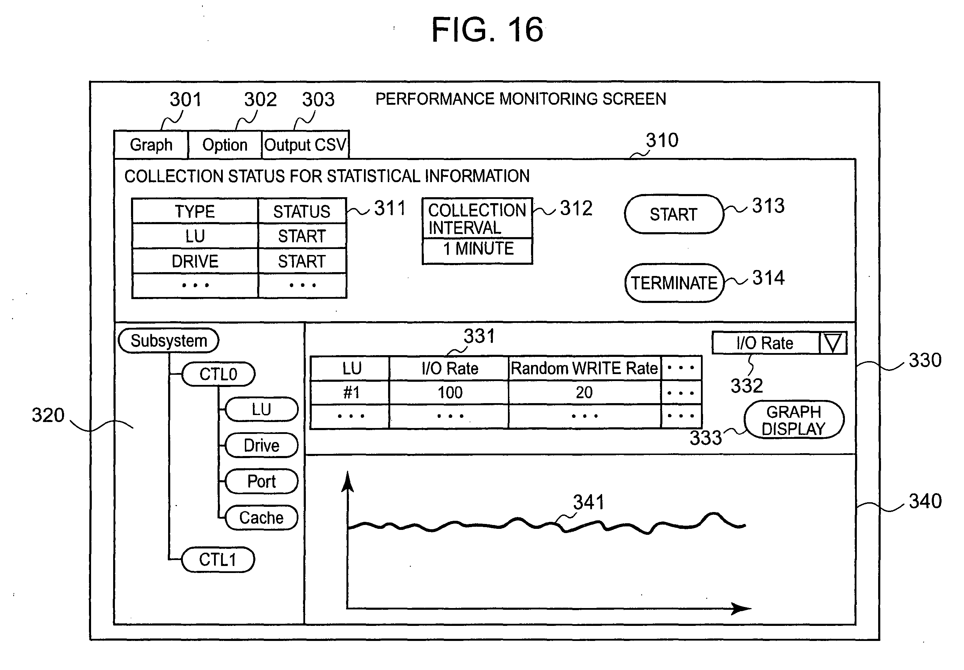

FIG. 16 is a diagram showing an example of a performance monitoring screen. The performance monitoring screen can have, for example, a graph display tab 301, and option tab 302, and an output tab 303. The user can move to the desired screen by selecting the desired tab. The graph display screen shown in FIG. 16 is displayed when the user selects the graph display tab 301. The display moves to the option screen when the user selects the option tab 302. The display moves to the output screen when the user selects the output tab 303. In the output screen, monitoring data can be output from the management terminal 20 to an external destination. The user can read the output monitoring data into a personal computer or mobile data terminal and the like, and conduct statistical processing and the like.

The graph display screen can be configured to include, for example, a monitoring status display unit 310, a tree display unit 320, a monitoring results display unit 330, and a graph display unit 340. The monitoring status display unit 310 can have, for example, a status display unit 311, an acquisition interval specification unit 312, a start button 313, and a termination button 314. The status display unit 311 displays a status indicating whether or not each monitoring target is monitored. The acquisition interval specification unit 312 specifies the monitoring cycle. The start button 313 is a button for instructing the start of performance monitoring. The termination button 314 is a button for instructing termination of monitoring.

The tree display unit 320 displays the configuration of the storage system (configuration of the primary storage device 100) in tree format. The user can select monitoring targets, and monitoring results for display, from the displayed tree.

The monitoring results display unit 330 is an area displaying monitoring results. The monitoring results display unit 330 can have, for example, a numerical display unit 331, a selector unit 332, and a graph display button 333. The numerical display unit 331 displays measured values related to indices selected with the selector unit 332 as numerical values for each monitoring target. The numerical display unit 331 can display only measured values for indices selected with the selector unit 332. However, in the present embodiment, the measured values for indices selected with the selector unit 332 are displayed at the left edge of the screen, and measured values for other indices are displayed consecutively to the right. The sequence of display is determined by the sequence of the items registered in the performance monitoring tables T10 and T10A.

When the user selects the graph display button 333, the monitoring results are displayed as graphs on the graph display unit 340. The graph format can be, for example, line graph, bar graph, or pie graph and the like. A graph of measured values related to the indices selected with the selector unit 332 are displayed in the graph display unit 340. Furthermore, a configuration in which the measured values of a plurality of indices are compared and displayed by providing a plurality of selector units 332 may also be used.

Thus, in the present embodiment, performance related to the migration destination volume is monitored, and the monitoring results are displayed on the terminal screen of the management terminal 20. The user can verify the performance monitoring screen, and determine whether or not the migration destination volume selection is suitable.

For example, consider the case of migrating a volume from an FC disk group operated with RAID1+0 to an SATA disk operated with RAID5. Following this migration, when the amount of random access of the volume is considerable, the response performance of the primary storage device 100 is reduced, and the quality of storage service is reduced. In this case, therefore, selection of a SATA disk group operated with RAID5 can be determined as unsuitable.

Therefore, as described below, the user cancels data migration and restores the original status. The user can select an unused volume created in another disk group, and conduct data migration again. For example, the user can create an unused volume in the FC disk group operated with RAID5, select this unused volume as the migration destination volume, and conduct data migration again.

Furthermore, as another example, consider the case of migrating a volume from a 15,000rpm FC disk group operated with RAID5 (group C2 in FIG. 9) to a 10, 000rpm FC disk group operated with RAID1+0 (group C3). Following this migration, when read access is more frequent than write access, the performance of the migration destination volume may not be as the user intended.

As shown in the table T11 in FIG. 9, the volume belonging to group C3 is ranked second at write access, and as shown in the table T12, the volume is ranked third at read access.

Thus, when read access of the volume belonging to the group C3 is frequent, there is a possibility that volume response performance of the volume will be reduced prior to data migration. By displaying the performance monitoring screen on the screen of the management terminal 20, the user can verify the read access rate and write access rate. The user can then select another group (for example, C1) and conduct data migration again.

In the above description, the case is described in which it is determined by the user whether or not data migration is to be conducted again, however, as described below, automatic evaluation of whether or not to conduct data migration, and cancellation of that data migration, are also possible.

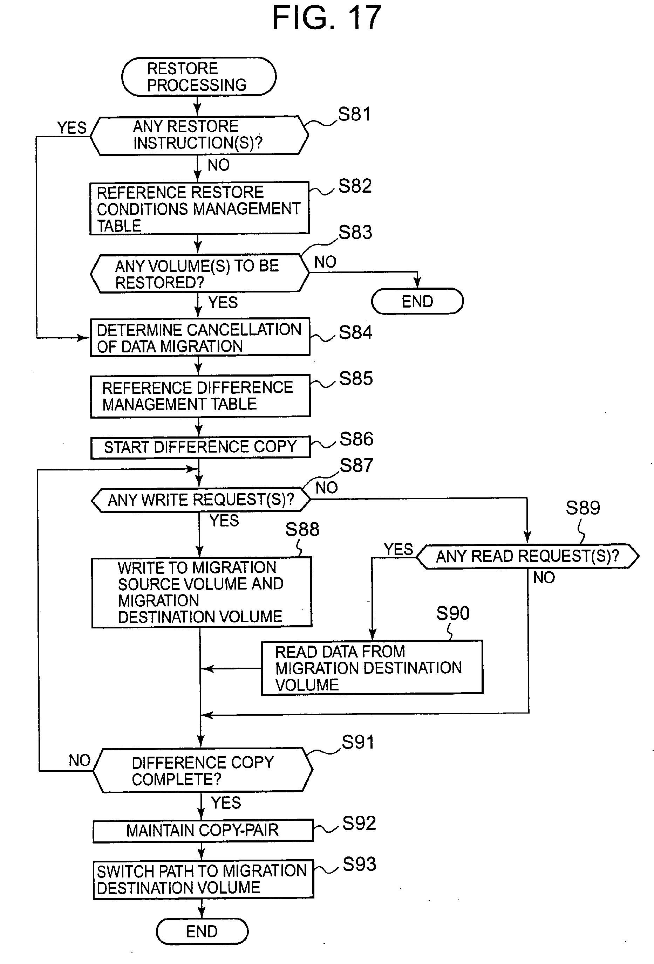

FIG. 17 is a flowchart showing restore processing for canceling executed data migration already executed and returning to the original status. As with the data migration processing described in FIG. 12, this restore processing can be conducted with the association between the management terminal 20 and the primary storage device 100.

In the present embodiment, S81 through S84 are executed by the storage management unit 21 of the management terminal 20, and S85 through S93 are executed by the primary storage device 100, for the purposes of this description. On the other hand, a configuration may be used in which all, or almost all, of the restore processing is executed by the primary storage device 100.

Firstly, the storage management unit 21 determines whether or not a restore instruction has been received from the user (S81). The restore instruction is an instruction for canceling data migration in the unconfirmed status, and returning to the original status. When the user instructs restore (YES in S81), the storage management unit 21 identifies the migration source volume and the migration destination volume, and instructs the primary storage device 100 to cancel data migration (S84).

When there is no restore instruction from the user (NO in S81), the storage management unit 21 references the restore conditions management table T7, and the performance monitoring tables T10 and T10A (S82), and determines whether or not there are any volumes to restore (S83). In other words, the storage management unit 21 determines whether or not measured performance values for the migration destination volume have reached the threshold values recorded in the restore conditions management table T7.

If there are no volumes to restore (NO in S83), the storage management unit 21 terminates this processing. If there are volumes to restore (YES in S83), the storage management unit 21 instructs the primary storage device 100 to cancel data migration (S84).

The control unit 101 of the primary storage device 100 references the difference management table T3 and the copy-pair management table T4 (S85), and induces copying of difference data managed by the migration destination volume to the migration source volume (S86).

Since only difference data created following completion of temporary data migration is copied, the difference copy is completed in a comparatively short time. However, an access request from the host 10 to the migration source volume occurs during difference copy in some cases. In the present embodiment, therefore, as when a full copy is conducted, access requests are also received from the host 10 during difference copy, and processed.

When a write command for the migration source volume is issued by the host 10 during difference copy (YES in S87), the control unit 101 writes write data received from the host 10 to the migration source volume and the migration destination volume (S88).

When a read command for the migration destination volume is issued by the host 10 during difference copy (NO in S87, YES in S89), the control unit 101 reads the requested data from the migration destination volume and sends that data to the host 10 (S90).

The control unit 101 continues processing access requests from the host 10, and executes difference copy, until difference copy is complete (NO in S91). When difference copy is complete (YES in S91), the control unit 101 terminates the copy-pair of the migration source volume and the migration destination volume, and updates the copy-pair management table T4 (S92). The control unit 101 switches the host 10 access path from the migration destination volume to the migration source volume (S93).

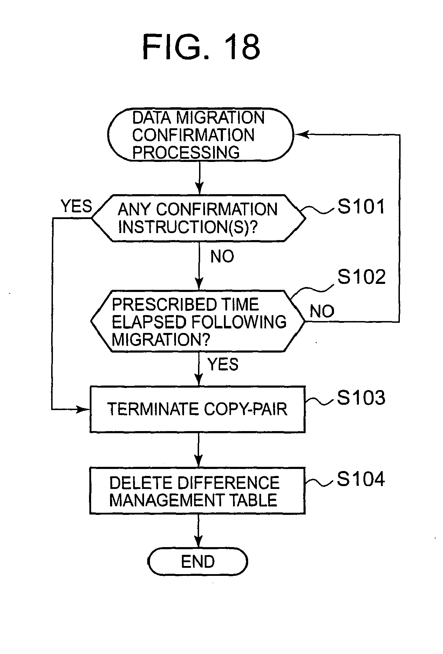

FIG. 18 is a flowchart showing processing for confirming temporary data migration.

As described above, in the present embodiment, when data migration is executed, the performance of the migration destination volume is monitored, and difference data managed, without terminating the copy-pair. Difference data management is completed when data migration restore processing is executed, or when data migration confirmation processing described below is executed.

Data migration confirmation processing is, for example, executed by the storage management unit 21 of the management terminal 20. On the other hand, a configuration may be used in which data migration confirmation processing is executed within the primary storage device 100.

The storage management unit 21 determines whether or not an instruction to the effect that datamigration is tobe confirmed is input from the user (S101). If there is no instruction from the user (NO in S101), the storage management unit 21 determines whether or not there is a migration destination volume for which the prescribed time has elapsed following data migration (S102). In other words, the storage management unit 21 determines whether or not there is a volume for which difference data is managed for a period equal to or greater than the preset prescribed time. This prescribed time can be, for example, expressed as 'upper limit time for difference management' or 'migration postponement time' and the like.

If there is a volume for which the prescribed time has elapsed following data migration (YES in S102), the storage management unit 21 issues an instruction to the primary storage device 100, and induces termination of the copy-pair of the migration destination volume and migration source volume (S103). The storage management unit 21 then instructs the control unit 101 to halt difference management and delete the difference management table T3 (S104), and completes this processing.

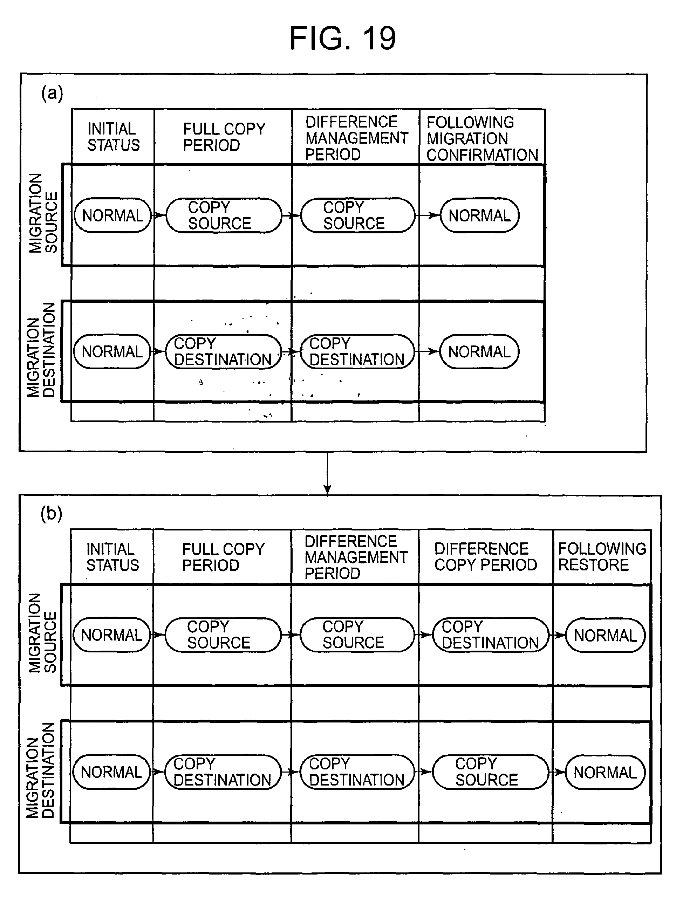

FIG. 19 is a diagram showing the state of change in status of the migration source volume and the migration destination volume in schematic format according to the present embodiment. FIG. 19A shows the change in status following data migration when continued use of the migration destination volume is decided.

The statuses of the migration source volume and the migration destination volume are both 'normal' prior to the start of data migration (initial status). When processing moves to the 'full copy phase' to conduct data migration, the status of the migration source volume changes from 'normal' to 'copy source', and the status of the migration destination volume changes from 'normal' to 'copy destination'.

When full copy is complete, processing transitions from the full copy phase the 'difference management phase'. The statuses of the migration source volume and the migration destination volume do not change with transition to the difference management phase. The migration source volume remains as the 'copy source', and the migration destination volume remains as 'copy destination'. In the difference management phase, difference data is managed while the copy-pair of the migration source volume and the migration destination volume is maintained unchanged.

When the afore-mentioned data migration confirmation processing is conducted, processing transitions from the difference management phase to the migration confirmation phase. In the migration confirmation phase, the status of the migration source volume changes from 'copy source' to 'normal', and the status of the migration destination volume changes from 'copy destination' to 'normal'.

FIG. 19B shows the change in status following data migration when that data migration is conducted again and the original status is restored. Since the change in status of the migration source volume and the migration destination volume from the initial status to the difference management phase is the same as described in FIG. 19A, a description is omitted.

As described above, the performance monitoring unit 22 monitors the performance of the migration destination volume in the difference management phase. When for example, as a result of this monitoring, the expected performance is not manifested, or when the deterioration in performance of the migration destination volume exceeds the scheduled deterioration in performance, this data migration is terminated.

When termination of data migration is decided, processing transitions to the difference copy phase, returns to the status prior to the start of data migration, and copying of difference data from the migration destination volume to the migration source volume is induced. Since the migration source volume is the reference volume accessed from the host 10 prior to the start of data migration, the migration source volume is again set as the reference volume, and copying of difference is conducted. In the difference copy phase, the migration destination volume becomes the 'copy source' , and the migration source volume becomes the 'copy destination'.

When difference copy is complete, processing transitions to the post-restore phase. In the post-restore phase, the status of the migration source volume changes from 'copy destination' to 'normal' , and the status of the migration destination volume changes from 'copy source' to 'normal'.

Since the is configured as described above, the following benefits are demonstrated.

In the present embodiment, the performance monitoring unit 22 monitors the operating status of the migration destination volume with the prescribed indices in accordance with the migration destination volume type. Thus, as with data migration and the like from an FC disk to a SATA disk, for example, the performance of the migration destination volume can be suitably monitored, even when data is migrated between volumes based on differing types of drives.

In the present embodiment, a configuration is used in which the status related to random access can be monitored. Thus, for example, the performance of drives having a low random access processing performance such as SATA disks can be more suitably evaluated. In other words, in the present embodiment, in a heterogeneous environment of mixed volumes of a plurality of types of differing technical characteristics, the weak points of these differing types of volumes can be monitored and evaluated.

In the present embodiment, a configuration is used in which data migration is controlled with the association between the management terminal 20 and the primary storage device 100. The monitoring results related to the performance of the migration destination volume can therefore be displayed and the like on the screen of the management terminal 20, and the user can readily determine whether or not the selection of the migration destination volume is suitable.

In the present embodiment, data migration can be executed automatically based on the preset data migration conditions. Furthermore, in the present embodiment, a configuration is used in which automatic restoration to the status prior to implementation of data migration is possible by comparing the monitoring results related to performance of the migration destination volume, and the preset restore conditions. In the present embodiment, therefore, autonomous data migration can be conducted, and ease of use by the user is improved.

In the present embodiment, a configuration is used in which access requests from the host 10 can be processed during execution of data migration. Furthermore, in the present embodiment, a configuration is used in which data copy between volumes can be conducted without the host 10. Thus, data migration can be implemented, and the ease of use of the storage system is improved, without affecting in any way application processing on the host 10.

In the present embodiment, a configuration is used in which difference data related to the migration destination volume is managed after temporary data migration is implemented. Thus, when terminating temporary data migration and returning to the original status, difference data need only be copied from the migration destination volume to the migration source volume, the time to return to the current condition can be reduced, and ease of use is increased. Furthermore, since only difference data need be managed, the load on the primary storage device 100 is also small.

In the present embodiment, a configuration is used in which the performance of the migration destination volume is monitored only for the preset prescribed time after temporary data migration is implemented, and when continued use of the migration destination volume is decided as a result of this monitoring, data migration is confirmed, and difference management is completed. Thus, unnecessary continuation of the unconfirmed status can be prevented, and the processing load on the primary storage device 100 can be reduced.

In the present embodiment, a configuration is used in the primary storage device 100 in which, by virtualizing the storage resources of the secondary storage device 200 within the primary storage device 100, these storage resources are incorporated as the storage resources of the primary storage device 100. Thus, the performance of the primary storage device 100 (cache memory capacity and CPU performance and the like) can be applied to the storage area provided by the disk drive 220 of the secondary storage device 200, and the storage resources within the storage system can be used effectively.

Thus, in the present embodiment, in the storage systemmixing a plurality of types of volumes, this plurality of types of volumes is virtualized within the primary storage device 100, and can be used effectively. Data migration between the plurality of types of volumes can then be conducted, and when data migration between the plurality of types of volumes is executed, performance can be suitably monitored in accordance with the type of migration destination volume.

The present invention is not limited to the afore-mentioned embodiments, and can be variously added to and changed and the like within the scope of the invention.

## Claims

1. A storage system comprising:
a plurality of types of volumes which can be used by a host device;
a control unit inducing migration of data between a migration source volume and a migration destination volume each selected from the plurality of types of volumes; and
a monitoring unit monitoring the operation status of the migration destination volume when data is migrated from the migration source volume to the migration destination volume by the control unit, wherein the monitoring unit monitors the operation status of the migration destination volume with prescribed indices in accordance with the type of migration destination volume.

2. The storage system according to Claim 1, wherein the control unit continually maintains the correspondence relationship between the migration source volume and the migration destination volume while the operation status of the migration destination volume is monitored by the monitoring unit.

3. The storage system according to Claim 1 or claim 2, wherein the plurality of types of volumes are classified by at least one attribute of: the storage device type set for each volume, the data I/O speed of the storage device set for each volume, and the RAID configuration type of each volume.

4. The storage system according to any one of Claims 1 to 3, wherein the migration destination volume is created based on a storage device of comparatively low reliability in comparison with the migration source volume.

5. The storage system according to any one of Claims 1 to 4, wherein at least one index is selected in accordance with the type of migration destination volume from among the total number of accesses per unit time, total number of write accesses per unit time, total number of read accesses per unit time, write access cache hit rate, read access cache hit rate, data transfer size per unit time, write data transfer size per unit time, and read data transfer size per unit time, and the monitoring unit monitors the operation status of the migration destination volume with the selected indices.

6. The storage system according to any one of Claims 1 to 3, wherein the migration destination volume is created based on a storage device of comparatively low random access performance in comparison with the migration source volume, and the monitoring unit monitors at least the random access status of the migration destination volume.

7. The storage system according to any one of Claims 1 to 6, further comprising:
a management computer connected to the control unit, and having a user interface which can display monitoring results from the monitoring unit, and issue instructions to the control unit; and
wherein the control unit controls data migration between the migration source volume and the migration destination volume based on instructions from the management computer.

8. The storage system according to any one of Claims 1 to 7, wherein the control unit:
conducts data migration from the migration source volume to the migration destination volume in accordance with preset migration conditions; and
determines whether or not to continue using the migration destination volume based on monitoring results from the monitoring unit related to the operation status of the migration destination volume, and preset restore conditions.

9. The storage system according to any one of Claims 1 to 8, wherein the control unit induces synchronization of the stored content of the migration destination volume and the stored content of the migration source volume when the control unit halts use of the migration destination volume based on monitoring results from the monitoring unit.

10. The storage system according to any one of Claims 1 to 9, wherein the control unit induces synchronization of the migration destination volume and migration source volume by inducing copying of difference data between the stored content of the migration destination volume and the stored content of the migration source volume from the migration destination volume to the migration source volume when the control unit halts use of the migration destination volume based on monitoring results from the monitoring unit.

11. The storage system according to any one of Claims 1 to 10, wherein the control unit:
manages difference data for the volumes while maintaining the correspondence relationship between the migration source volume and the migration destination volume when data migration from the migration source volume to the migration destination volume is completed; and
induces synchronization of the migration destination volume and the migration source volume by inducing copying of difference data to the migration source volume when halting use of the migration destination volume based on monitoring results from the monitoring unit.

12. The storage system according to any one of Claims 1 to 11, wherein the control unit can receive access requests from the host device while inducing migration of data between the migration source volume and the migration destination volume.

13. The storage system according to any one of Claims 1 to 12, wherein the control unit induces writing of write data to both the migration source volume and the migration destination volume when that write data is received from the host device, while inducing migration of data between the migration source volume and the migration destination volume.

14. The storage system according to any one of Claims 1 to 13, wherein:
the monitoring unit terminates monitoring related to the operation status of the migration destination volume when the preset prescribed time has elapsed following completion of migration from the migration source volume to the migration destination volume; and
the control unit induces confirmation of data migration from the migration source volume to the migration destination volume when monitoring with the monitoring unit is terminated.

15. The storage system according to any one of Claims 1 to 14, wherein:
the monitoring unit terminates monitoring related to the operation status of the migration destination volume when an explicit termination instruction is received; and
the control unit induces confirmation of data migration from the migration source volume to the migration destination volume when monitoring by the monitoring unit is terminated.

16. A storage system data migration method for controlling data migration between volumes in a storage system having a plurality of types of volumes, comprising :
a selection step for selecting a migration source volume and a migration destination volume from the plurality of types of volumes;
a first copying step for mutually assigning the migration source volume and the migration destination volume to create a copy-pair, and first copying the entire stored content of the migration source volume to the migration destination volume;
a first writing step for receiving write access from the host device during execution of the first copy, and writing write data received from the host device to the migration source volume and the migration destination volume;
a first switching step for switching access from the host device to the migration destination volume following completion of the first copy;
a difference management step for managing difference data created between the migration destination volume and the migration source volume; and
amonitoring step for monitoring the operation status of the migration destination volume with prescribed indices in accordance with the type of migration destination volume, following completion of the first copy.

17. The storage system data migration method according to Claim 16, further comprising:
a determination step for determining whether or not to halt use of the migration destination volume based on monitoring results from the monitoring step, following the monitoring step;
a second copying step for second copying difference data managed in the difference management step to the migration source volume when a decision is made in the determination step to halt use of the migration destination volume;
a second writing step for writing write data received from the host device to the migration destination volume and the migration source volume respectively during execution of the second copy;
a copy-pair termination step for terminating the copy-pair created in the first copying step, following completion of the second copy; and
a second switching step for switching access from the host device to the migration source volume, following termination of the copy-pair.

18. The data migration method between volumes according to Claim 17, further comprising a migration confirmation step of terminating the copy-pair and completing management of difference data by the difference data management step following the determination step when a decision is made by the determination step to continue use of the migration destination volume.

19. A storage system comprising:
a storage device which can provide a plurality of types of volumes to a host device and a management computer for managing the storage device, wherein the storage device comprises:
a plurality of types of disk drives for creating the plurality of types of volumes; and
a control unit for controlling communications between the host device and the disk drives, and inducing migration of data between a migration source volume and a migration destination volume selected from the plurality of types of volumes; and wherein
the management computer comprises:
a storage management unit for conducting communications with the control unit; and
a monitoring unit for monitoring the operation status of the migration destination volume by collecting prescribed information from the control unit via the storage management unit when data is migrated from the migration source volume to the migration destination volume by the control unit;
and wherein the monitoring unit can monitor the operation status of the migration destination volume based on the prescribed indices in accordance with the type of migration destination volume, and output the monitoring results.

20. The storage system according to Claim 19, wherein the control unit:
creates a copy-pair of the migration source volume and the migration destination volume, and migrates data from the migration source volume to the migration destination volume by inducing copying of the entire stored content of the migration source volume to the migration destination volume;
switches access from the host device from the migration source volume to the migration destination volume after the completion of data migration;
manages write data written to the migration destination volume by the host device as difference data while maintaining the copy-pair;
induces copying of the difference data to the migration source volume when continued use of the migration destination volume is halted by an instruction from the monitoring unit; and
terminates the copy-pair and switches access from the host device from the migration destination volume to the migration source volume following completion of copying of the difference data from the migration source volume to the migration destination volume.
